# EUROPÄISCHE PATENTSCHRIFT

(11) **EP 3 329 190 B1**
(45) Veröffentlichungstag und Bekanntmachung des Hinweises auf die Patenterteilung: **17.03.2021**
(21) Anmeldenummer: 16744371.2
(22) Anmeldetag: 26.07.2016
(51) Int. Cl.: F25B 1/10, F25B 49/02, F25B 5/02, F25B 9/00, F25B 41/04

(54) **KÄLTEANLAGE**
REFRIGERATION SYSTEM
INSTALLATION FRIGORIFIQUE

(30) Priorität: 29.07.2015 DE 102015112439
(43) Veröffentlichungstag der Anmeldung: 06.06.2018
(73) Patentinhaber: BITZER Kühlmaschinenbau GmbH, 71065 Sindelfingen (DE)
(72) Erfinder: JAVERSCHEK, Oliver, 72072 Tübingen (DE)
(74) Vertreter: Hoeger, Stellrecht & Partner Patentanwälte mbB
(86) Internationale Anmeldenummer: PCT/EP2016/067759
(87) Internationale Veröffentlichungsnummer: WO 2017/017088

(56) Entgegenhaltungen:
- WO-A2-2009/086493
- CH-A1- 703 290
- DE-A1- 4 309 137
- US-A- 6 161 394
- US-A1- 2014 326 018

## Beschreibung

Die Erfindung betrifft eine Kälteanlage umfassend einen Kältemittelkreislauf, in welchem ein Gesamtmassenstrom eines Kältemittels geführt ist, einen in dem Kältemittelkreislauf angeordneten, hochdruckseitiges Kältemittel kühlenden Wärmeübertrager, ein im Kältemittelkreislauf angeordnetes Expansionsorgan, das im aktiven Zustand den Gesamtmassenstrom des Kältemittels durch Expansion kühlt und dabei einen Hauptmassenstrom aus flüssigem Kältemittel und einen Zusatzmassenstrom aus gasförmigem Kältemittel erzeugt, die in einen Zwischendrucksammler eintreten und in diesem in den Hauptmassenstrom und den Zusatzmassenstrom getrennt werden, mindestens eine Normalkühlstufe, welche aus dem Hauptmassenstrom in dem Zwischendrucksammler einen Normalkühlmassenstrom abführt und in mindestens einer Normalkühlexpansionseinheit auf einen Niederdruck expandiert und dabei die Kälteleistung zur Normalkühlung zur Verfügung stellt, eine den Normalkühlmassenstrom von Niederdruck auf Hochdruck verdichtende Kältemittelverdichtereinheit, und einen Parallelverdichter, welcher in einem Parallelverdichtungsbetrieb des Kältemittelkreislaufs Kältemittel aus dem Zwischendrucksammler ansaugt und auf Hochdruck verdichtet.

Derartige Kälteanlagen sind aus dem Stand der Technik bekannt.

Das Dokument WO 2009/086493 offenbart eine Kälteanlage gemäß dem Oberbegriff des Anspruchs 1.

Bei diesen Kälteanlagen besteht stets das Bedürfnis, diese möglichst effizient zu betreiben.

Diese Aufgabe wird durch eine Kälteanlage gemäß Anspruch 1 gelöst.

Insbesondere erfolgt die Regelung des Zwischendrucks auf den Zwischendrucksollwert durch Leistungsregelung, vorzugsweise Drehzahlregelung, des Parallelverdichters.

Der Vorteil der erfindungsgemäßen Lösung ist dabei darin zu sehen, dass damit die Möglichkeit besteht, durch Vorgabe eines Zwischendrucksollwerts den Zwischendruck auf verschiedene variierende Zwischendruckwerte zu regeln und damit durch die Variation des Zwischendrucks den Wirkungsgrad der Kälteanlage zu steigern.

Besonders vorteilhaft ist es dabei, wenn der Zusammenhang zwischen der Führungsgröße und dem mit dieser sich ändernden Zwischendrucksollwert so ermittelt wird, dass sich bezogen auf den Wirkungsgrad bei konstantem Zwischendruck im Parallelverdichtungsbetrieb durch den variierenden Zwischendrucksollwert eine Steigerung des Wirkungsgrades ergibt.

Unter einem Wirkungsgrad im Sinne der erfindungsgemäßen Lösung ist dabei der Gesamtwirkungsgrad der Kälteanlage zu verstehen, der sich aus der für die jeweilige Kälteleistung benötigten Energie zum Betrieb der Kälteanlage ermitteln lässt.

Insbesondere ist dabei eine Integration des Wirkungsgrads über einen definierten Zeitraum, beispielsweise ein Jahr, vorgesehen, wobei sich bedingt durch die klimatischen Schwankungen während dieses Jahres und der erforderlichen Kälteleistung an verschiedenen geografischen Orten unterschiedliche Werte für den integrierten Wirkungsgrad ergeben.

Erfindungsgemäß berücksichtigt die Steuerung zur Ermittlung des Zwischendrucksollwerts nur innerhalb eines zwischendruckvariierenden Führungsgrößenbereichs liegende Führungsgrößen.

Ein zwischendruckvariierender Führungsbereich ist dabei ein Teilbereich eines lastbedingten Führungsgrößenbereichs, der die Führungsgrößen bei allen möglichen Lastzuständen des Kältemittelkreislaufs umfasst, während ein zwischendruckvariierender Führungsgrößenbereich nur einen Teilausschnitt aus diesem lastbedingten Führungsgrößenbereich darstellt. Eine derartige Beschränkung des zwischendruckvariierenden Führungsgrößenbereichs auf einen Teilausschnitt des lastbedingten Führungsgrößenbereichs hat den Vorteil, dass dadurch die Variation der Zwischendrucksollwerte in einem Zusammenhang mit den Werten der Führungsgrößen gebracht werden kann, bei denen die Variation des Zwischendrucksollwerts sich mit möglichst großer Signifikanz auf den Wirkungsgrad auswirkt.

Weiterhin ist vorgesehen, dass die Steuerung die nur Zwischendrucksollwerte zur Regelung des Zwischendrucks heranzieht, die in einem sich von einem Minimalzwischendruck bis zu einem Maximalzwischendruck erstreckenden Bereich liegen.

Diese Lösung hat den großen Vorteil, dass dadurch die Variation der Zwischendrucksollwerte auf Werte beschränkt wird, die die übrigen Steuerungs- und Regelungsprozesse in dem Kältemittelkreislauf nicht signifikant betreffen.

Insbesondere hat das Vorsehen eines Minimalzwischendrucks als untere Grenze für die Zwischendrucksollwerte den großen Vorteil, dass dadurch der Zwischendruck nicht auf Werte abgesenkt wird, die die Funktion der nachgeschalteten Kühlexpansionseinheiten, insbesondere der Normalkühlexpansionseinheit und gegebenenfalls einer Tiefkühlexpansionseinheit beeinträchtigen.

Der Maximalzwischendrucksollwert wird ferner vorzugsweise so gelegt, dass dieser ein für den Wirkungsgrad optimaler Zwischendrucksollwert bei Volllast ist.

Hinsichtlich des Zusammenhangs zwischen den Führungsgrößen und dem dadurch bedingten Zwischendrucksollwert wurden bislang keine weiteren detaillierten Angaben gemacht.

Die Erfindung sieht dabei vor, dass innerhalb des zwischendruckvariierenden Führungsgrößenbereichs eine Zunahme des Wertes der Führungsgröße zu einer Zunahme des Wertes des Zwischendrucksollwertes führt und insbesondere auch eine Abnahme des Werts der Führungsgröße zu einer Abnahme des Werts des Zwischendrucksollwerts führt.

Dabei kann aufgrund dieses allgemeinen Zusammenhangs zwischen der Führungsgröße und dem Zwischendrucksollwert noch ein unterschiedlicher Zusammenhang im Einzelnen bestehen.

Eine sehr einfache Lösung sieht vor, dass innerhalb des zwischendruckvariierenden Führungsgrößenbereichs ein linearer Zusammenhang zwischen dem Wert der Führungsgröße und dem Zwischendrucksollwert besteht.

Eine andere vorteilhafte Lösung sieht vor, dass innerhalb des zwischendruckvariierenden Führungsbereichs der Zusammenhang zwischen dem Wert der Führungsgröße und dem Zwischendrucksollwert nichtlinear ist. Vorzugsweise erfolgt die Ermittlung des Zwischendrucksollwerts auf der Basis der Führungsgröße durch unterschiedliche Vorgehensweisen.

Eine Möglichkeit ist die, bei verschiedenen Führungsgrößen die Steigerung des Wirkungsgrads durch Variation des Zwischendrucksollwerts experimentell zu ermitteln und die entsprechenden Wertepaarungen zwischen der Führungsgröße und dem entsprechenden Zwischendrucksollwert in einer Tabelle in der Steuerung abzulegen.

Eine andere Möglichkeit besteht darin, durch Simulationsrechnungen bei verschiedenen Führungsgrößen und Variation des Zwischendrucksollwerts die Steigerung des Wirkungsgrades zu ermitteln und ebenfalls in einer Tabelle in der Steuerung festzulegen.

Eine andere vorteilhafte Lösung besteht darin, durch einen mathematischen Algorithmus aufgrund beispielsweise experimenteller oder simulierter Daten, einen Zusammenhang zwischen den Führungswerten, der Führungsgröße und den Zwischendrucksollwerten, die eine Steigerung des Wirkungsgrades in Relation zu einem konstanten Zwischendrucksollwert ermöglichen, festzulegen.

Hinsichtlich des Wirkungsgrads hat es sich als besonders vorteilhaft erwiesen, wenn der Zusammenhang zwischen dem Wert der Führungsgröße und dem Zwischendrucksollwert durch die Einsatzgrenzen des Parallelverdichters vorgegeben wird.

Das heißt, dass der Verlauf der Einsatzgrenze gleichzeitig auch den Verlauf des Zusammenhangs zwischen der Führungsgröße und dem Zwischendrucksollwert vorgibt.

Insbesondere ist bei einer Orientierung an der Einsatzgrenze vorgesehen, dass der Zusammenhang zwischen der Führungsgröße und dem Zwischendrucksollwert dadurch vorgegeben ist, dass zu den jeweiligen Werten der Führungsgröße der jeweils größtmögliche Wert des Zwischendrucksollwerts innerhalb der Einsatzgrenze des Parallelverdichters ausgewählt wird.

Damit ist sichergestellt, dass einerseits der Parallelverdichter innerhalb seiner Einsatzgrenze betrieben wird und andererseits sichergestellt, dass der zu dem jeweiligen Wert der Führungsgröße bestimmte Zwischendrucksollwert möglichst groß gewählt wird, um dem Wirkungsgrad möglichst hoch zu halten.

Besonders vorteilhaft lässt sich eine derartige Auswahl des Zwischendrucksollwerts gestalten, wenn die Werte für den Zwischendrucksollwert entlang der Einsatzgrenze des Parallelverdichters liegende mögliche Werte sind.

Hinsichtlich der Art der Führungsgrößen wurden im Zusammenhang mit der bisherigen Erläuterung der einzelnen Lösungen keine näheren Angaben gemacht.

So sieht eine vorteilhafte Lösung vor, dass der Wert des Hochdrucks im Kältemittelkreislauf die Führungsgröße darstellt.

Eine andere vorteilhafte Lösung sieht vor, dass eine Temperatur des Kältemittels beim Austritt aus dem hochdruckseitigen kältemittelkühlenden Wärmeübertrager die Führungsgröße darstellt.

Eine weitere vorteilhafte Lösung sieht vor, dass eine Umgebungstemperatur der den hochdruckseitigen kältemittelkühlenden Wärmeübertrager kühlenden Luft die Führungsgröße darstellt.

Im Rahmen der erfindungsgemäßen Lösung ist vorgesehen, dass die Steuerung nur eine einzige Führungsgröße zur Ermittlung des Zwischendrucksollwerts heranzieht.

Eine andere vorteilhafte Lösung sieht vor, dass die Steuerung mehrere Führungsgrößen zur Ermittlung des Zwischendrucksollwerts heranzieht.

Es ist aber auch ergänzend dazu im Rahmen der erfindungsgemäßen Lösung vorgesehen, dass die Steuerung zu der nur einen Führungsgröße oder zu den mehreren Führungsgrößen zusätzlich noch weitere Parameter des Kältemittelkreislaufs zur Ermittlung des Zwischendrucksollwerts heranzieht.

Hinsichtlich der Lage des zwischendruckvariierenden Führungsgrößenbereichs innerhalb des lastbedingten Führungsbereichs wurden bislang keine näheren Angaben gemacht.

So hat es sich als Vorteil erwiesen, wenn der zwischendruckvariierende Führungsgrößenbereich einen thermodynamisch kritischen Führungsgrößenwert mitumfasst, d.h. dieser thermodynamisch kritische Führungsgrößenwert innerhalb des zwischendruckvariierenden Führungsgrößenbereichs liegt.

Alternativ dazu ist es ebenfalls von Vorteil, wenn der zwischendruckvariierende Führungsgrößenbereich nahe dem thermodynamisch kritischen Führungsgrößenwert FK liegt.

Dabei ist unter dem Begriff "nahe dem thermodynamisch kritischen Führungsgrößenwert" beispielsweise ein Wert von weniger als 20 % des kritischen Führungsgrößenwerts noch besser weniger als 15 % des kritischen Führungsgrößenwerts und vorzugsweise weniger als 10 % des kritischen Führungsgrößenwerts zu verstehen.

Ein derartiger thermodynamisch kritischer Führungsgrößenwert liegt dann vor, wenn das Kältemittel in einem dem thermodynamischen kritischen Punkt entsprechenden Zustand ist.

Ist beispielsweise die Führungsgröße der Hochdruck im Kältemittelkreislauf, so ist der thermodynamisch kritische Führungsgrößenwert durch den kritischen Druck des Kältemittels bestimmt.

Ist beispielsweise die Führungsgröße die Temperatur des Kältemittels am Austritt des hochdruckseitigen, kältemittelkühlenden Wärmeübertragers, so entspricht dem thermodynamisch kritischen Führungsgrößenwert die kritische Temperatur des Kältemittels.

Eine weitere vorteilhafte Ausführungsform der erfindungsgemäßen Lösung sieht vor, dass der zwischendruckvariierende Führungsgrößenbereich sich von einem oberen Führungsgrößenwert bis zu einem unteren Führungsgrößenwert erstreckt.

In diesem Fall ist bei einer günstigen Lösung vorgesehen, dass der obere Führungsgrößenwert mit der Führungsgröße bei Volllast zusammenfällt.

Eine andere vorteilhafte Lösung sieht vor, dass der obere Führungsgrößenwert unterhalb der Führungsgröße für Volllast liegt.

In diesem Fall erfolgt bei der erfindungsgemäßen Lösung bei Werten der Führungsgröße zwischen der Führungsgröße bei Volllast und dem oberen Führungsgrößenwert keine Variation des Zwischendrucksollwerts.

Vorzugsweise bleibt der Zwischendrucksollwert bei Werten der Führungsgröße zwischen der Führungsgröße bei Volllast und dem oberen Führungsgrößenwert auf dem Zwischendrucksollwert bei Volllast.

Darüber hinaus sieht eine weitere günstige Lösung vor, dass der untere Führungsgrößenwert mit einem parallelverdichtungsbegrenzenden Führungsgrößenwert zusammenfällt.

Das heißt, dass sich der untere Führungsgrößenwert des zwischendruckvariierenden Führungsgrößenbereichs bis zu dem parallelverdichtungsbegrenzenden Führungsgrößenwert erstreckt, bei welchem ein Übergang vom Parallelverdichtungsbetrieb auf den Flashgas/Bypass-Betrieb erfolgen kann. Alternativ dazu sieht eine günstige Lösung vor, dass der untere Führungsgrößenwert oberhalb des parallelverdichtungsbegrenzenden Führungsgrößenwerts liegt.

In diesem Fall ist vorgesehen, dass sich der Zwischendrucksollwert zwischen dem unteren Führungsgrößenwert des zwischendruckvariierenden Führungsgrößenbereichs und dem parallelverdichtungsbegrenzenden Führungsgrößenwert nicht ändert.

Vorzugsweise bleibt der Zwischendrucksollwert in diesem Fall konstant, und zwar vorzugsweise bei dem dem parallelverdichtungsbegrenzenden Führungsgrößenwert entsprechenden Zwischendrucksollwert.

Bei der erfindungsgemäßen Kälteanlage ist vorzugsweise vorgesehen, dass die Steuerung dann, wenn die Führungsgröße einen parallelverdichtungsbegrenzenden Führungsgrößenwert unterschreitet, vom Parallelverdichtungsbetrieb auf Flashgas/Bypass-Betrieb umschaltet.

Ein derartiges Umschalten von Parallelverdichtungsbetrieb auf Flashgas/Bypass-Betrieb ist deshalb erforderlich, weil der Parallelverdichter seine Einsatzgrenze erreicht und somit nur mit erhöhtem Verschleiß bei niedrigeren Führungsgrößen und somit niedrigeren Lastzuständen betrieben werden kann.

Beim Übergang zum Flashgas/Bypass-Betrieb ist dabei beispielsweise vorgesehen, dass die Steuerung im Flashgas/Bypass-Betrieb den Parallelverdichter abschaltet.

Eine andere vorteilhafte Lösung sieht vor, dass die Steuerung im Flashgas/Bypass-Betrieb den Parallelverdichter zur Verdichtung von Kältemittel von Niederdruck auf Hochdruck einsetzt, jedoch nichtmehr zum Verdichten des Zusatzmassenstroms aus dem Zwischendrucksammler.

Im Flashgas/Bypass-Betrieb ist ferner vorzugsweise vorgesehen, dass die Steuerung den Kältemittelkreislauf so betreibt, dass ein Expansionsorgan Kältemittel aus dem Zwischendrucksammler auf ein niedrigeres Druckniveau expandiert und den Zwischendruck auf einem vorgebbaren Wert hält.

Der vorgebbare Wert des Zwischendrucks im Flashgas/Bypass-Betrieb entspricht dabei vorzugsweise dem Zwischendrucksollwert bei Erreichen des Parallelverdichtungsbegrenzenden Führungsgrößenwerts.

Die Expansion des Kältemittels aus dem Zwischendrucksammler kann dabei im Flashgas/Bypass-Betrieb vorzugsweise auf Niederdruck erfolgen.

Die Variation des Zwischendrucksollwerts entsprechend der Führungsgröße kann dazu führen, dass der vom Parallelverdichter zu verdichtende Zusatzmassenstrom sehr gering wird und somit der Parallelverdichter bei Drehzahlen betrieben werden muss, für die dieser nicht geeignet ist.

Aus diesem Grund ist vorzugsweise vorgesehen, dass die Steuerung die Variation oder Regelung des Zwischendrucksollwerts in Abhängigkeit von der Führungsgröße unterbricht, wenn eine Drehzahl des Parallelverdichters auf eine vorgegebene Minimaldrehzahl abgefallen ist, und wieder aufnimmt, wenn die Drehzahl des Parallelverdichters wieder höher ist als die vorgegebene Minimaldrehzahl.

Durch das Vorgeben der Minimaldrehzahl besteht somit die Möglichkeit, den Parallelverdichter stets in einem geeigneten Drehzahlbereich zu betreiben, ohne dass dieser aufgrund der Variation oder Regelung des Zwischendrucksollwerts in Abhängigkeit von der Führungsgröße Schaden nehmen kann.

Die vorgegebene Minimaldrehzahl muss dabei nicht der minimal zulässigen Drehzahl des Parallelverdichters entsprechen, sondern kann auch von dieser abweichend, beispielsweise höher als diese, gewählt werden, je nachdem wie die Verhältnisse in der Kälteanlage gestaltet sind oder welche Betriebszustände auftreten können.

Alternativ oder ergänzend sieht eine weitere vorteilhafte Lösung vor, dass die Steuerung die Variation oder Regelung des Zwischendrucksollwerts in Abhängigkeit von der Führungsgröße unterbricht, wenn ein Öffnungsgrad des Expansionsorgans auf einen vorgegebenen minimalen Öffnungsgrad abgefallen ist, und wieder aufnimmt, wenn der Öffnungsgrad des Expansionsorgans wieder größer ist als der vorgegebene minimale Öffnungsgrad.

Durch den vorgegebenen minimalen Öffnungsgrad des Expansionsorgans liegt ebenfalls eine Größe vor, die ein Maß für den anfallenden Zusatzmassenstrom und somit ein Maß für den durch den Parallelverdichter wiederum zu verdichtenden Zusatzmassenstrom darstellt, und mit dem Öffnungsgrad des Expansionsorgans lässt sich somit sicherstellen, dass ein ausreichend großer Zusatzmassenstrom anfällt.

Durch den Öffnungsgrad des Expansionsorgans ist dabei definiert, in welchem Maße das Expansionsorgan öffnet, um unter Hochdruck stehendes Kältemittel durch Expansion zu kühlen und um dabei den Hauptmassenstrom aus dem flüssigen Kältemittel und den Zusatzmassenstrom aus dem gasförmigen Kältemittel zu erzeugen.

Dabei kann das Expansionsorgan je nach der Größe des die Kälteanlage durchlaufenden Gesamtmassenstroms zwischen minimaler Öffnung und maximaler Öffnung in mehr oder weniger starkem Maße geöffnet sein und dieses Maß der Öffnung des Expansionsorgans ist als Öffnungsgrad bezeichnet.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung eines ersten Ausführungsbeispiels einer erfindungsgemäßen Kälteanlage;
- Fig. 2: ein schematisches Einsatzdiagramm E für einen Parallelverdichter im Parallelverdichtungsbetrieb mit Darstellung der Werte der Führungsgrößen F und der Zwischendrucksollwerte PZS in Relation zu den Einsatzgrenzen EG;
- Fig. 3: eine Darstellung entsprechend Fig. 2 mit Darstellung einer ersten Variante des Zusammenhangs zwischen den Führungsgrößen und dem Zwischendrucksollwert;
- Fig. 4: eine Darstellung entsprechend Fig. 2 mit Darstellung einer zweiten Variante des Zusammenhangs zwischen den Führungsgrößen und dem Zwischendrucksollwert;
- Fig. 5: eine Darstellung ähnlich Fig. 4 einer dritten Variante des Zusammenhangs zwischen den Führungsgrößen und dem Zwischendrucksollwert;
- Fig. 6: eine Darstellung entsprechend Fig. 2 mit Darstellung einer vierten Variante des Zusammenhangs zwischen den Führungsgrößen und dem Zwischendrucksollwert;
- Fig. 7: eine Darstellung entsprechend Fig. 2 mit Darstellung einer fünften Variante des Zusammenhangs zwischen den Führungsgrößen und dem Zwischendrucksollwert;
- Fig. 8: eine Darstellung eines zweiten Ausführungsbeispiels einer erfindungsgemäßen Kälteanlage;
- Fig. 9: eine schematische Darstellung eines dritten Ausführungsbeispiels einer erfindungsgemäßen Kälteanlage;
- Fig. 10: eine Darstellung eines vierten Ausführungsbeispiels einer erfindungsgemäßen Kälteanlage;
- Fig. 11: eine Darstellung eines fünften Ausführungsbeispiels einer erfindungsgemäßen Kälteanlage;
- Fig. 12: ein schematisches Einsatzdiagramm E für einen Parallelverdichter im Parallelverdichtungsbetrieb mit Darstellung der Werte der Führungsgrößen F und der Zwischendrucksollwerte PZS in Relation zu den Einsatzgrenzen EG und
- Fig. 13: eine schematische Darstellung eines Gebäudes mit einer erfindungsgemäßen Kälteanlage.

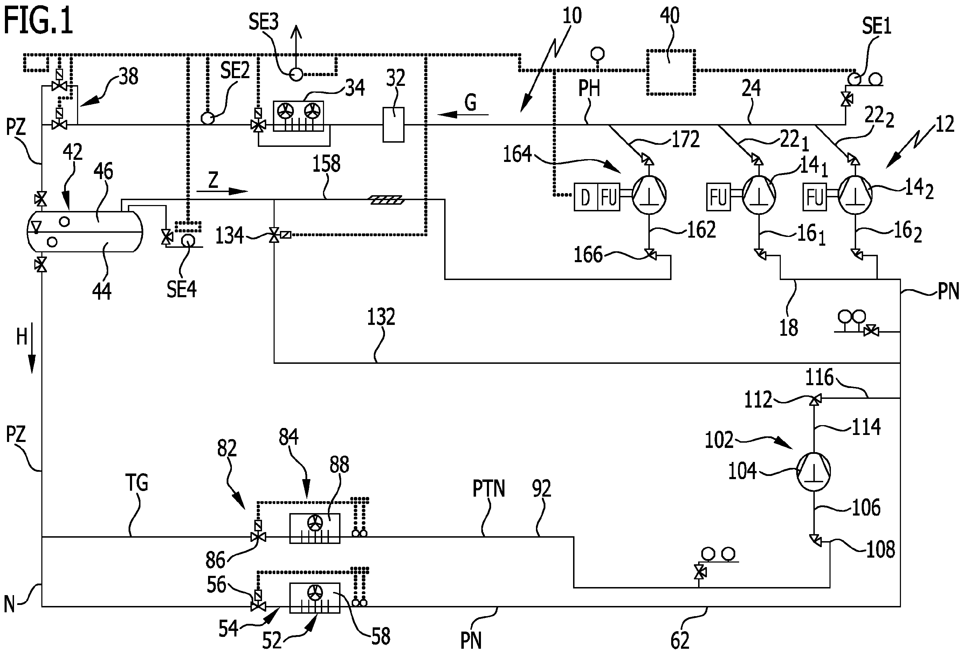

Ein erstes Ausführungsbeispiel einer erfindungsgemäßen Kälteanlage, dargestellt in Fig. 1, umfasst einen als Ganzes mit 10 bezeichneten Kältemittelkreislauf, in welchem eine als Ganzes mit 12 bezeichnete Kältemittelverdichtereinheit angeordnet ist, die im dargestellten Ausführungsbeispiel mehrere einzelne Kältemittelverdichter, beispielsweise zwei Kältemittelverdichter 14₁ bis 14₂, aufweist, die alle parallel geschaltet in der Kältemittelverdichtereinheit 12 arbeiten.

Jeder der Kältemittelverdichter 14₁, 14₂ weist einen saugseitigen Anschluss 16₁, 16₂ auf, wobei alle saugseitigen Anschlüsse 16 der einzelnen Kältemittelverdichter 14 mit einer Sauganschlussleitung 18 der Kältemittelverdichtereinheit 12 verbunden sind.

Ferner weist jeder der Kältemittelverdichter 14 einen druckseitigen Anschluss 22₁, 22₂ auf, wobei alle druckseitigen Anschlüsse 22 der einzelnen Kältemittelverdichter 14 mit einer Druckanschlussleitung 24 der Kältemittelverdichtereinheit 12 verbunden sind.

Somit arbeiten alle Kältemittelverdichter 14 parallel, es besteht jedoch die Möglichkeit, die Verdichterleistung der Kältemittelverdichtereinheit 12 dadurch zu variieren, dass einzelne Kältemittelverdichter 14 arbeiten und einzelne Kältemittelverdichter 14 nicht arbeiten.

Ferner besteht die Möglichkeit, die Verdichterleistung der Kältemittelverdichtereinheit 12 durch eine drehzahlvariable Steuerung entweder eines arbeitenden Kältemittelverdichters 14 zu steuern oder die Drehzahl von einzeln arbeitenden Kältemittelverdichter 14 individuell zu steuern.

Die Kältemittelverdichtereinheit 12 verdichtet somit Kältemittel von einem in der Sauganschlussleitung 18 anliegenden Saugdruck, welcher einem Niederdruck PN einer noch zu beschreibenden Normalkühlstufe entspricht, auf einem in der Druckanschlussleitung 24 der Kältemittelverdichtereinheit 12 vorliegenden Hochdruck PH, der beispielsweise im Bereich zwischen ungefähr 40 bar (400 N/cm²) und ungefähr 100 bar (1000 N/cm²) liegen kann.

Das unter Hochdruck PH an der Druckanschlussleitung 24 vorliegende Kältemittel bildet einen Gesamtmassenstrom G, der von der Druckanschlussleitung 24 der Kältemittelverdichtereinheit 12 weg strömt, zunächst einen Ölabscheider 32 durchströmt und nach dem Ölabscheider 32 einen hochdruckseitigen Wärmeübertrager 34 durchströmt, durch welchen eine Kühlung des auf Hochdruck verdichteten Kältemittels erfolgt.

Je nachdem, ob ein unterkritischer Kreisprozess oder ein überkritischer Kreisprozess vorliegt, erfolgt durch das Abkühlen des Gesamtmassenstroms G des auf Hochdruck verdichteten Kältemittels im hochdruckseitigen Wärmeübertrager 34 ein Verflüssigen desselben oder lediglich ein Abkühlen desselben auf eine niedrigere Temperatur, wobei im Fall eines überkritischen Kreisprozesses nur eine sensible Wärmeänderung erfolgt.

Wird als Kältemittel Kohlendioxid, das heißt CO₂, eingesetzt, so liegt bei gängigen Umgebungsbedingungen üblicherweise ein überkritischer Kreisprozess vor, bei welchem lediglich eine Abkühlung auf eine Temperatur erfolgt, die einer außerhalb der Tau- und Siedelinie oder Sättigungskurve verlaufenden Isothermen entspricht, so dass keine Verflüssigung des Kältemittels eintritt.

Im Gegensatz dazu sieht ein unterkritischer Kreisprozess vor, dass durch den hochdruckseitigen Wärmeübertrager 34 eine Abkühlung auf eine Temperatur erfolgt, die einer die Tau- und Siedelinie oder Sättigungskurve des Kältemittels durchlaufenden Isothermen entspricht.

Das durch den hochdruckseitigen Wärmeübertrager 34 abgekühlte Kältemittel wird einem in einer Druckleitung 36 angeordneten Expansionsorgan 38 zugeführt, welches den Hochdruck PH entsprechend von einer Steuerung 40 vorgegebenen Werten regelt und welches beispielsweise als durch die Steuerung 40 angesteuertes Expansionsorgan 38 ausgebildet ist und welches das unter Hochdruck PH stehende Kältemittel des Gesamtmassenstroms G auf einen Zwischendruck PZ expandiert, welcher einer die Tau- und Siedelinie oder Sättigungskurve des Kältemittels durchlaufenden Isothermen entspricht.

Die Steuerung 40 steuert das Expansionsorgan 38 gemäß einer Temperatur im Wärmeübertrager 34 und dieser vorgegebenen Einsatzgrenzen der Kältemittelverdichter 14.

Der Zwischendruck PZ liegt beispielsweise im Bereich zwischen 35 bar und 45 bar und wird - wie nachfolgend im Detail beschrieben - von der Steuerung 40 in möglichst allen Betriebszuständen auf einen für einem möglichst günstigen Wirkungsgrad (COP) geeigneten Zwischendrucksollwert PZS geregelt.

Durch das Expansionsorgan 38 wird der Gesamtmassenstrom G des Kältemittels in einen thermodynamischen Zustand versetzt, in welchem ein Hauptmassenstrom H in Form von flüssigem Kältemittel vorliegt und ein Zusatzmassenstrom Z in Form von gasförmigen Kältemittel.

Beide Massenströme H und Z werden in einem Zwischendrucksammler 42, der ein Reservoir sowohl für den Hauptmassenstrom H als auch für den Zusatzmassenstrom Z aufweist, gesammelt und in dem Zwischendrucksammler 42 voneinander getrennt, wobei der Hauptmassenstrom H sich im Zwischendrucksammler 42 als Bad 44 aus flüssigem Kältemittel ausbildet, über welchem ein Gasvolumen 46 aus gasförmigem Kältemittel liegt, so dass das Bad 44 den Hauptmassenstrom H aufnimmt und das Gasvolumen 46 den Zusatzmassenstrom Z aufnimmt.

Von dem das Bad 44 aus flüssigem Kältemittel bildenden Hauptmassenstrom H strömt aus dem Zwischendrucksammler 42 ein Normalkühlmassenstrom N als Teilmassenstrom des Hauptmassenstroms H zu einer als Ganzes mit 52 bezeichneten Normalkühlstufe, welche eine oder mehrere, beispielsweise eine Normalkühlexpansionseinheit 54 aufweist.

Diese Normalkühlexpansionseinheit 54 umfasst ein Normalkühlexpansionsorgan 56, durch welches eine Expansion des unter Zwischendruck PZ ankommenden Teils des Normalkühlmassenstroms N auf Niederdruck PN erfolgt, wobei eine Abkühlung des Kältemittels in bekannter Art und Weise durch diese Expansion eintritt, die die Möglichkeit eröffnet, in dem jeweiligen auf das Normalkühlexpansionsorgan 56 folgenden Normalkühlwärmeübertrager 58 Wärme aufzunehmen, wodurch eine Enthalpiezunahme entsteht. Der Niederdruck PN liegt beispielsweise im Bereich zwischen 20 bar und 30 bar und wird in alle Betriebszuständen möglichst konstant gehalten, das heißt innerhalb von maximal ± 3 bar des vorgegebenen Wertes des Niederdrucks PN.

Der insgesamt auf Niederdruck PN expandierte Normalkühlmassenstrom N wird von den Normalkühlwärmeübertragern 58 einer Saugleitung 62 zugeführt, die ihrerseits mit der Sauganschlussleitung 18 der Kältemittelverdichtereinheit 12 verbunden ist, so dass dieser expandierte Normalkühlmassenstrom N von der Kältemittelverdichtereinheit 12 wieder auf Hochdruck PH verdichtet werden kann.

Aus dem Hauptmassenstrom H im Zwischendrucksammler 42 wird nicht nur der Normalkühlmassenstrom N als Teilstrom abgezweigt, sondern als weiterer Teilstrom ein Tiefkühlgesamtmassenstrom TG.

Der Tiefkühlgesamtmassenstrom TG wird einer Tiefkühlstufe 82 zugeführt, welche eine oder mehrere, beispielsweise eine, parallele Tiefkühlexpansionseinheiten 84 aufweist, wobei jede dieser Tiefkühlexpansionseinheiten 84 ein Tiefkühlexpansionsorgan 86 aufweist, welches den Tiefkühlgesamtmassenstroms TG auf einen Tiefkühlniederdruck PTN expandiert und somit abkühlt, wobei der Tiefkühlniederdruck PTN in allen Betriebszuständen möglichst konstant gehalten wird, und beispielsweise zwischen 10 bar und 15 bar liegt so dass die Abweichungen maximal ± 3 bar betragen.

Das auf Tiefkühlniederdruck PTN abgekühlte Kältemittel wird dann nachfolgend einem tiefkühlniederdruckseitigen Wärmeübertrager 88 zugeführt und ist in dem jeweiligen Tiefkühlwärmeübertrager 88 in der Lage, bei Tiefkühltemperaturen Wärme aufzunehmen, wodurch die Enthalpie erhöht wird.

Der insgesamt in der Tiefkühlstufe 82 auf Tiefkühlniederdruck PTN expandierte Tiefkühlgesamtmassenstrom TH wird einer Tiefkühlsaugleitung 92 zugeführt, die mit dem Tiefkühlwärmeübertrager 88 verbunden ist und den auf Tiefkühlniederdruck PTN expandierten Tiefkühlgesamtmassenstrom TG einer als Ganzes mit 102 bezeichneten Tiefkühlverdichtereinheit zuführt, welche beispielsweise einen oder mehrere parallel arbeitende Tiefkühlverdichter 104 aufweist, der einen saugseitigen Anschluss 106 aufweist, welche mit einem Tiefkühlsauganschluss 108 der Tiefkühlverdichtereinheit 102 verbunden sind, der seinerseits wiederum mit der Tiefkühlsaugleitung 92 verbunden ist und den auf Tiefkühlniederdruck PTN expandierten Tiefkühlgesamtmassenstrom TG aufnimmt.

Die Tiefkühlverdichter 104 weisen ferner einen druckseitigen Anschluss 112 auf, der seinerseits wiederum mit einer Tiefkühldruckanschlussleitung 114 der Tiefkühlverdichtereinheit 102 verbunden sind.

Die Tiefkühlverdichtereinheit 102 verdichtet den Tiefkühlgesamtmassenstrom TG, welcher die Tiefkühlstufe 82 durchströmt hat und auf den Tiefkühlniederdruck PTN expandiert wurde, wiederum auf den Normalkühlniederdruck PN, wobei der auf den Normalkühlniederdruck PN verdichtete Tiefkühlmassenstrom TH über eine Leitung 116 der Sauganschlussleitung 18 der Kältemittelverdichtereinheit 12 zugeführt wird.

Zur Abfuhr des Zusatzmassenstroms Z aus dem Gasvolumen 46 des Zwischendrucksammlers 42 ist eine Aufnahmeleitung 158 vorgesehen, welche zu einer Saugleitung 162 eines zusätzlich zu der Kältemittelverdichtereinheit 12 vorgesehenen Parallelverdichters 164 führt, und zwar zu einem Sauganschluss 166 desselben, dessen Druckanschluss 172 wiederum mit der Druckanschlussleitung 24 verbunden ist, so dass durch entsprechende drehzahlgeregelte Ansteuerung des Parallelverdichters 164 die Möglichkeit besteht, den Zusatzmassenstrom Z aus dem Zwischendrucksammler 42 abzuführen.

Diese Betriebsweise des Kältemittelkreislaufs wird als Parallelverdichtungsbetrieb bezeichnet.

Ferner ist eine von der Aufnahmeleitung 158 abzweigende Verbindungsleitung 132 zur Saugleitung 62 vorgesehen, in welcher ein als Ganzes mit 134 bezeichnetes und von der Steuerung 40 gesteuertes Expansionsorgan vorgesehen ist, welches einen Durchfluss von Kältemittel in Richtung der Aufnahmeleitung 158 zu der Saugleitung 62 erlaubt.

Durch Aktivieren des Expansionsorgans 134 besteht bei einem Abschalten des Parallelverdichters 164 die Möglichkeit, die Kältemittelverdichter 14 der Kältemittelverdichtereinheit 12 dazu einzusetzen, dass Kältemittel aus dem Zwischendrucksammler 42 über die Aufnahmeleitung 158 und die Verbindungsleitung 132 mit dem Expansionsorgan 134 der Saugleitung 62 zugeführt werden kann, der somit durch die Kältemittelverdichter 14 der Kältemittelverdichtereinheit 12 auf Hochdruck PH verdichtet werden kann, wobei vorzugsweise einer der Kältemittelverdichter 14 ebenfalls drehzahlgeregelt ist, so dass insgesamt zwei jeweils leistungsgeregelte oder drehzahlgeregelte Kältemittelverdichter zur Verfügung stehen.

Diese Betriebsweise des Kältemittelkreislaufs 10 wird als Flashgas/Bypass-Betrieb bezeichnet.

Die Steuerung 40 steuert einerseits die Leistung des Parallelverdichters 164 zur Regelung des Zwischendrucks PZ auf einen Zwischendrucksollwert PZS im Parallelverdichtungsbetrieb und aktiviert oder deaktiviert andererseits das Expansionsorgan 134 und zwar entsprechend den vorhandenen Lastzuständen, wobei die Lastzustände von der Steuerung 40 durch Erfassen mindestens einer Führungsgröße F ermittelt werden.

Wird der Kältemittelkreislauf 10 im Parallelverdichtungs-Betrieb betrieben, wobei der Parallelverdichter 164 bei deaktiviertem Expansionsorgan 134 arbeitet, so wird der gesamte Zusatzmassenstrom Z über die Aufnahmeleitung 158 und die Saugleitung 162 dem Sauganschluss 166 des Parallelverdichters 164 zugeführt wird, der dann den Zusatzmassenstrom Z auf den Hochdruck PH verdichtet, der am Druckanschluss 172 desselben anliegt.

Aufgrund der Werte für die Führungsgröße F ist die Steuerung 40 im Parallelverdichtungsbetrieb in der Lage einen Zwischendrucksollwert PZS zu ermitteln und durch Leistungssteuerung des Parallelverdichters 164, insbesondere Drehzahlsteuerung des Parallelverdichters 164, die Werte des Zwischendrucks PZ auf den ermittelten Zwischendrucksollwert PZS zu regeln.

Die Ermittlung des Zwischendrucksollwerts PZS in Abhängigkeit von der Führungsgröße F erfolgt unter Berücksichtigung des Wirkungsgrades des gesamten Kältemittelkreislaufs 10 bei dem jeweiligen Lastzustand wobei die Wertepaarungen für die jeweilige Führungsgröße F und den entsprechenden Zwischendrucksollwerts PZS entweder durch eine Tabelle oder einen festgelegten Algorithmus von der Steuerung 40 ermittelt werden.

Dient beispielsweise der Hochdruck PH in der Druckanschlussleitung 24 als Führungsgröße F, so erfasst die Steuerung 40 den Wert des Hochdrucks PH mittels eines Sensors SE1, der in unterschiedlichen Positionen hochdruckseitig angeordnet sein kann, beispielsweise mit der Druckanschlussleitung 24 verbunden ist.

Vorzugsweise ist der Sensor SE1 zwischen dem Wärmeübertrager 34 und dem Expansionsorgan 38 angeordnet.

Dient beispielsweise eine Kältemitteltemperatur T am Ausgang des hochdruckseitigen Wärmeübertragers 34 als Führungsgröße F', so erfasst die Steuerung 40 den Wert derselben mit einem Sensor SE2, der ausgangsseitig des Wärmeübertragers 34 angeordnet ist.

Dient beispielsweise eine Temperatur der den hochdruckseitigen Wärmeübertrager 34 durchströmenden Umgebungsluft als Führungsgröße F", so erfasst die Steuerung 40 den Wert derselben mit einem Sensor SE3.

Es ist aber auch möglich, dass die Steuerung 40 zwei der Führungsgrößen F, F' und F" oder alle drei Führungsgrößen F, F', F" oder noch weitere Zustandsparameter des Kältemittelkreislaufs 10 zu der Ermittlung des Zwischendrucksollwertes PZS heranzieht.

Ferner erfasst die Steuerung 40 mittels eines Sensors SE4, der beispielsweise mit dem Zwischendrucksammler 42 verbunden ist, den Wert des Zwischendrucks PZ und ist dadurch in der Lage, den Zwischendruck PZ im Zwischendrucksammler 42 auf den ermittelten Zwischendrucksollwert PZS zu regeln.

Durch diese Regelung des Zwischendrucks PZ in Abhängigkeit von der jeweiligen Führungsgröße F lässt sich der Wirkungsgrad COP des Kältemittelverdichterkreislaufs 10 steigern, insbesondere wenn man über einen längeren Betriebszeitraum, beispielsweise einen Betriebszeitraum von einem Jahr integral den Wirkungsgrad COP betrachtet.

Dabei ist generell anzustreben, den Parallelverdichtungsbetrieb so lange aufrechtzuerhalten wie möglich, da grundsätzlich der Parallelverdichtungsbetrieb in Bezug auf den Flashgas/Bypass-Betrieb hinsichtlich des Wirkungsgrads COP nennenswerte Vorteile bietet.

Allerdings lässt sich der Zwischendruck PZ lediglich zwischen einem maximalen Zwischendruck MaPZ und einem minimalen Zwischendruck MiPZ variieren, da ansonsten die übrigen Funktionen des Kältemittelkreislaufs 10, beispielsweise die Funktion der Normalkühlexpansionseinheit 54 und/oder die Funktion der Tiefkühlexpansionseinheit 84 nennenswert beeinträchtigt sind.

Der Parallelverdichtungsbetrieb lässt sich jedoch nicht bis zum Erreichen des minimal möglichen Teillastbetriebs aufrechterhalten, da Einsatzgrenzen EG des Parallelverdichters 164 und der Drehzahlbereich des Parallelverdichters 164 zu beachten sind.

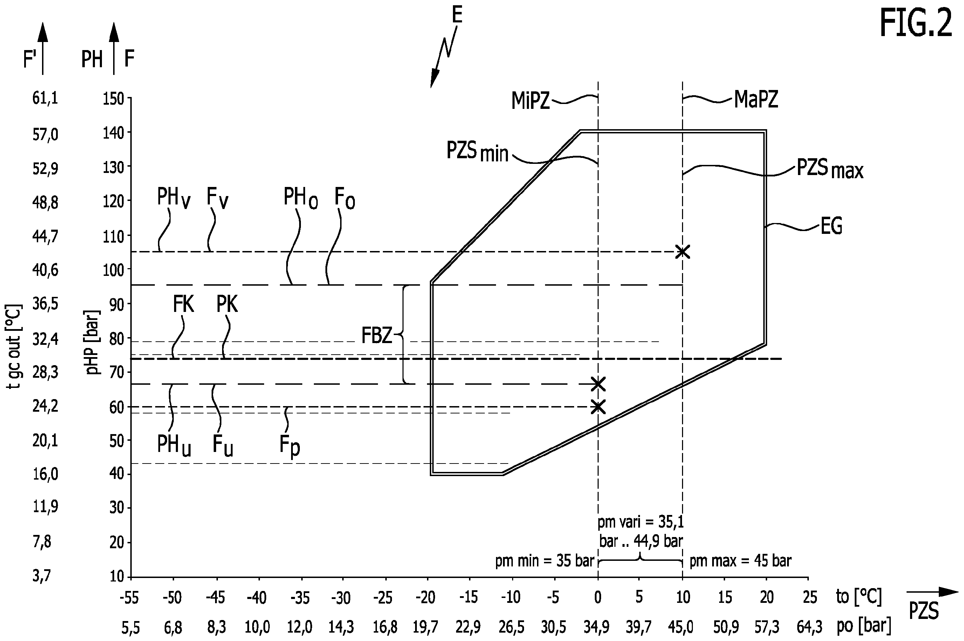

Die Betriebsparameter für den Parallelverdichter 164 sind in Fig. 2 im Zusammenhang mit dem Einsatzdiagramm E für den Parallelverdichter 164 dargestellt, wobei alle zulässigen Wertepaarungen für die Führungsgröße F, beispielsweise der Hochdruck PH und der Zwischendruck PZ, innerhalb der Einsatzgrenze EG liegen müssen.

Bei Volllast liegt gemäß Fig. 2 die Führungsgröße Fᵥ, beispielsweise der Wert PHᵥ für den Hochdruck PH, vor, der die Steuerung 40 dazu veranlasst, den Parallelverdichter 164 hinsichtlich seiner Leistung so zu steuern, dass dieser den dem Maximalzwischendruck MaPZ entsprechenden Zwischendrucksollwert PZSₘₐₓ vorgibt und den Zwischendruck PZ im Zwischendrucksammler 42 entsprechend regelt.

Bei abnehmender Last wird der Wert der Führungsgröße F, beispielsweise der Hochdruck PH, im Kältemittelkreislauf 10 niedriger.

Diese muss nicht zwingend zu einer Veränderung des Zwischendrucksollwerts PZS führen, sondern es wird beispielsweise der Zwischendrucksollwert PZS auf dem Maximalzwischendruck MaPZ belassen.

Erst wenn die Führungsgröße F, beispielsweise der Hochdruck PH, einen Wert Fₒ, entsprechend dem Wert PHₒ des Hochdrucks PH, erreicht hat, beginnt die Steuerung 40 den Zwischendrucksollwert PZS zu verändern, und zwar in Richtung des Werts des Minimalzwischendrucks MiPZ.

Der Wert Fₒ, entsprechend dem Wert PHₒ des Hochdrucks PH, stellt einen oberen Grenzwert eines zwischendruckvariierenden Führungsgrößenbereichs FBZ dar, der sich von dem oberen Führungsgrößenwert Fₒ bis zu einem unteren Führungsgrößenwert Fᵤ erstreckt, wobei die Steuerung 40 den Zwischendrucksollwert PZS beim Durchlaufen dieses zwischendruckvariierenden Führungsgrößenbereichs FBZ so variiert, dass bei Erreichen des Führungsgrößenwerts Fᵤ, der in diesem Fall dem Wert PHᵤ des Hochdrucks PH entspricht, der Zwischendrucksollwert PZSₘᵢₙ dem Wert des Minimalzwischendrucks MiPZ entspricht.

Der zwischendruckvariierende Führungsgrößenbereich FBZ liegt innerhalb eines lastbedingten Führungsgrößenbereichs FBL, der alle durch die möglichen Lastzustände des Kältemittelkreislaufs 10 bedingten Führungsgrößen F umfasst.

Unterschreitet die Führungsgröße F den unteren Führungsgrößenwert Fᵤ, so gibt die Steuerung 40 weiter den Zwischendrucksollwert PZSₘᵢₙ zur Regelung des Zwischendrucks PZ vor.

Wenn die Führungsgröße F einen parallelverdichtungsbegrenzenden Führungsgrößenwert Fₚ unterschreitet, erkennt die Steuerung 40, dass der Parallelverdichter 164 die Einsatzgrenze EG zu überschreiten droht und beendet den Parallelverdichtungsbetrieb durch Abschalten des Parallelverdichters 164 und Aktivieren des Expansionsorgans 134, so dass der Flashgas/Bypass-Betrieb vorliegt, der es erlaubt die Führungsgröße F unter den Führungsgrößenwert Fₚ abzusenken, ohne dass der Parallelverdichter 164 Schaden nimmt, da der Zusatzmassenstrom Z nicht mehr ausreichend groß wäre, um den Parallelverdichter 164 verschleißfrei zu betreiben.

Im Flashgas/Bypass-Betrieb arbeitet das Expansionsorgan 134 allerdings so, dass es in der Lage ist, einen konstanten Zwischendruck PZ nahe dem Wert PZₘᵢₙ aufrecht zu erhalten, wobei eine Expansion des Zusatzmassenstroms Z auf Niederdruck PN erfolgt.

Bei der Beschreibung des zwischendruckvariierenden Führungsgrößenbereichs FBZ wurde der Lage relativ zu dem Lastbedingten Führungsgrößenbereich FBL nicht näher spezifiziert.

Vorzugsweise liegt der zwischendruckvariierende Führungsgrößenbereich FBZ so innerhalb des Führungsgrößenbereichs FBL, dass ein thermodynamisch kritischer Führungsgrößenwert FK innerhalb des Führungsgrößenbereichs FBZ liegt oder dass der Führungsgrößenbereich FBZ nahe des kritischen Führungsgrößenwerts FK liegt, da es sich im Hinblick auf den Wirkungsrad als günstig erwiesen hat, den Zwischendrucksollwert PZS in einem um den kritischen Führungsgrößenwert FK herum liegenden Bereich der Führungsgröße F zu variieren.

Im Fall des Hochdrucks PH als Führungsgröße F entspricht der kritische Führungsgrößenwert FK dem thermodynamisch kritischen Druck PK des Kältemittels.

Wie aus Fig. 2 ebenfalls ersichtlich, kann als Führungsgröße F' beispielsweise auch die Temperatur am Ausgang des hochdruckseitigen Wärmeübertragers 34 herangezogen werden.

In diesem Fall ist der kritische Führungsgrößenwert FK die thermodynamisch kritische Temperatur TK des Kältemittels.

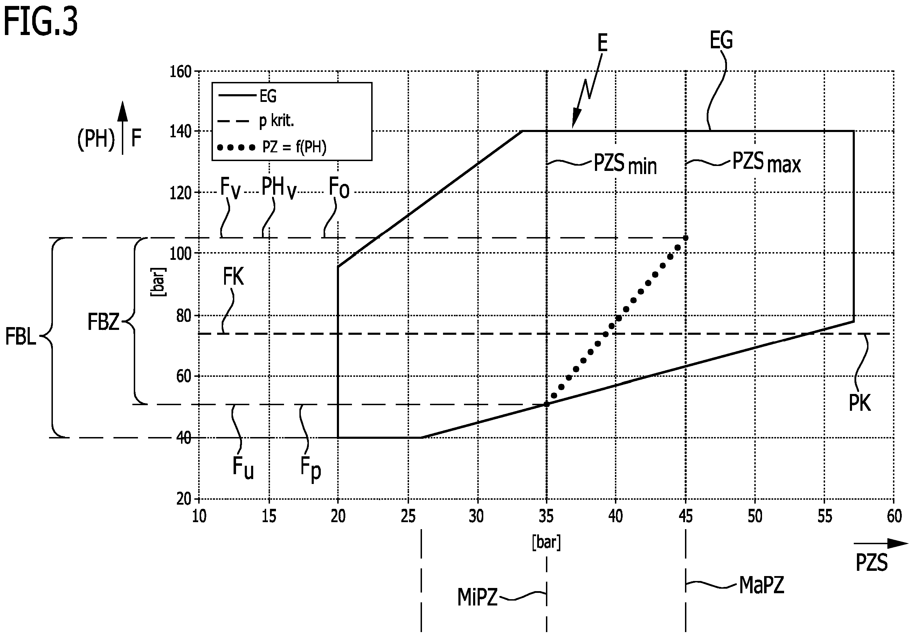

Der Zusammenhang zwischen der Führungsgröße F und dem Zwischendrucksollwert PZS innerhalb des Führungsgrößenbereichs FBZ wurde bislang nicht näher dargelegt. Wie sich aus den Fig. 3 bis 6 ergibt, sind die verschiedensten Varianten möglich.

Bei der in Fig. 3 dargestellten ersten Variante erstreckt sich der zwischendruckvariierende Führungsgrößenbereich FBZ von der Führungsgröße Fᵥ bei Volllast bis zum Führungsgrößenwert Fᵤ, der unterhalb der kritischen Führungsgröße FK liegt, so dass die Führungsgröße Fᵥ mit dem oberen Führungsgrößenwert Fₒ zusammenfällt und die parallelverdichtungsbegrenzende Führungsgröße Fₚ mit dem unteren Führungsgrößenwert Fᵤ zusammenfällt.

Ferner besteht innerhalb des Führungsgrößenbereichs FBZ ein linearer Zusammenhang zwischen dem Wert der Führungsgröße F und dem Zwischendrucksollwert PZS, so dass die Zu- oder Abnahme der Führungsgröße F sich proportional auf den Zwischendrucksollwert PZS auswirkt.

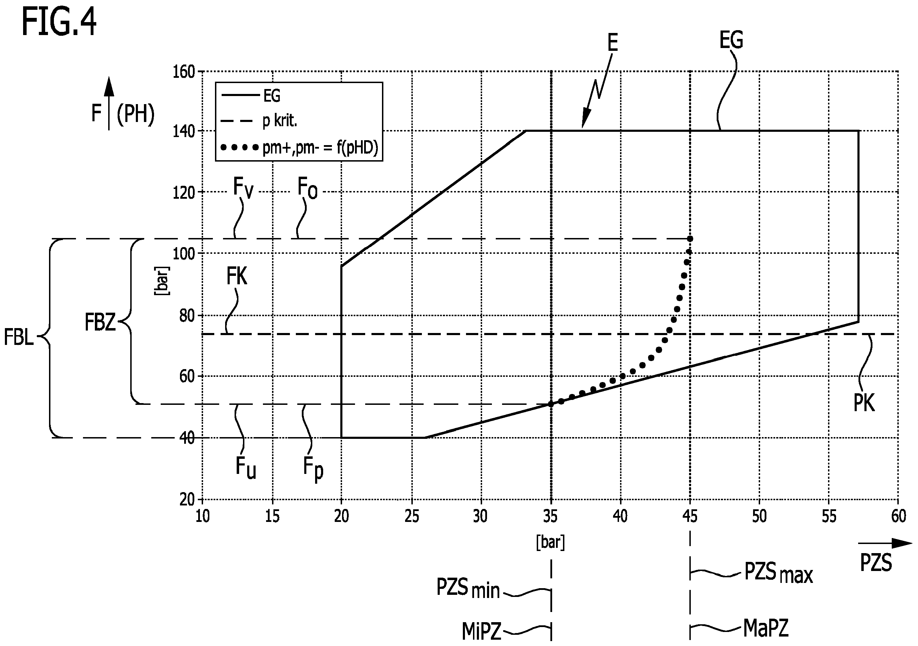

Bei einer in Fig. 4 dargestellten zweiten Variante ist der Führungsgrößenbereich FBZ in gleicher Weise angeordnet wie bei der ersten Variante, allerdings besteht zwischen der Führungsgröße F und dem Zwischendrucksollwert PZS ein nichtlinearer Zusammenhang, beispielsweise ein komplexer exponentiell/linearer Zusammenhang.

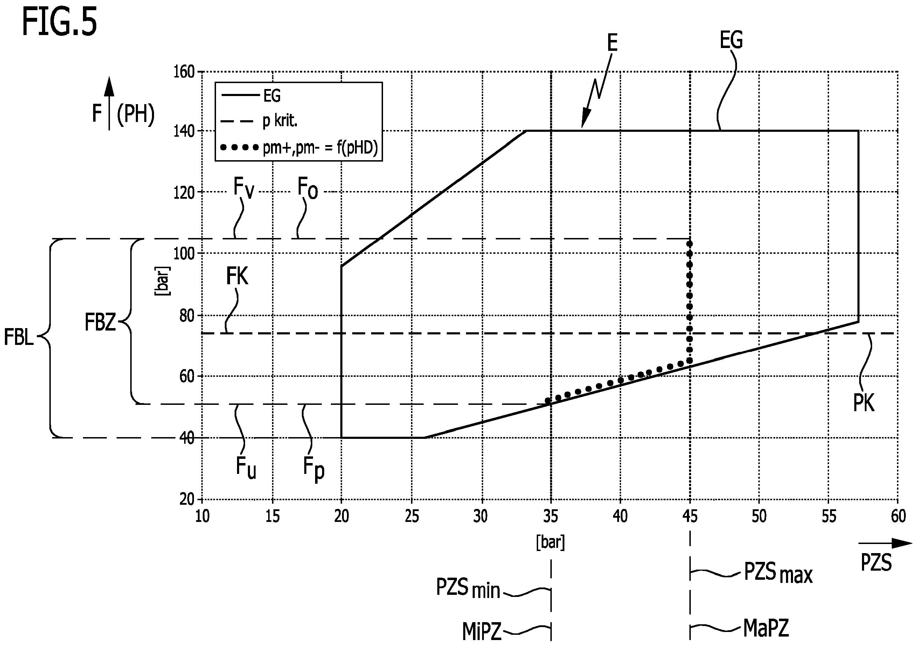

Eine dritte Variante, dargestellt in Fig. 5, basiert auf der zweiten Variante, wobei der Zusammenhang zwischen der Führungsgröße F und dem Zwischendrucksollwert PZS durch die sich zwischen dem Wert PZSₘᵢₙ und dem Wert PZSₘₐₓ erstreckende untere Einsatzgrenze EG des Einsatzdiagramms E des Parallelverdichters 164 vorgegeben wird, da bei der dritten Variante die Werte des Zwischendrucksollwerts PZS so vorgegeben sind, dass sie zwar innerhalb der Einsatzgrenze EG aber nahe des Verlaufs der unteren Einsatzgrenze EG (das heißt die Einsatzgrenze EG des Einsatzdiagramms E bei den niedrigsten Werten der Führungsgröße F) zwischen den Werten PZSₘᵢₙ und PZSₘₐₓ liegen. Bei Erreichen des Werts PZSₘₐₓ bleibt dieser Wert dann auch bei einer weiter ansteigenden Führungsgröße F erhalten.

Das heißt, dass bei der dritten Variante gemäß Fig. 5 der Zwischendrucksollwert PZS ausgehend von niedrigen Werten der Führungsgröße F, beispielsweise beginnend bei den Werten Fₚ, dann wenn eine Variation zwischen dem Wert PZSₘᵢₙ und dem Wert PZSₘₐₓ möglich ist, so groß wie möglich, jedoch stets innerhalb der Einsatzgrenze E liegend gewählt wird.

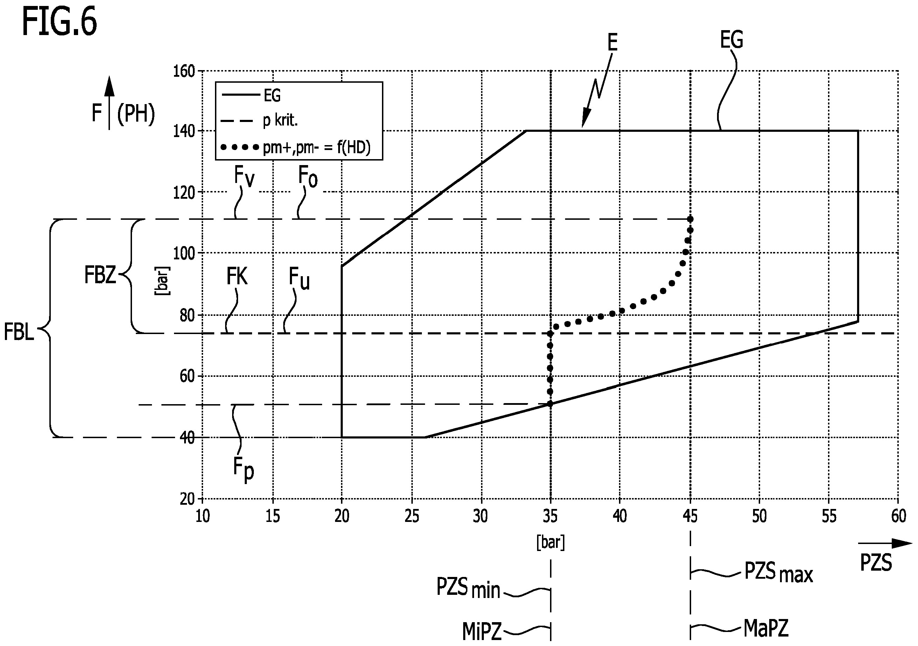

Bei einer vierten Variante, dargestellt in Fig. 6, erstreckt sich der Führungsgrößenbereich FBZ von der Führungsgröße Fᵥ bis zur kritischen Führungsgröße FK und der Zusammenhang zwischen der Führungsgröße F und dem Zwischendrucksollwert ist nichtlinear, beispielsweise exponentiell.

In diesem Fall hält die Steuerung 40 bei Werten der Führungsgröße F zwischen dem unteren Führungsgrößenwert Fᵤ und dem parallelverdichtungsbegrenzenden Führungsgrößenwert Fₚ den Zwischendrucksollwert PZS auf dem minimalen Zwischendrucksollwert PZSₘᵢₙ konstant.

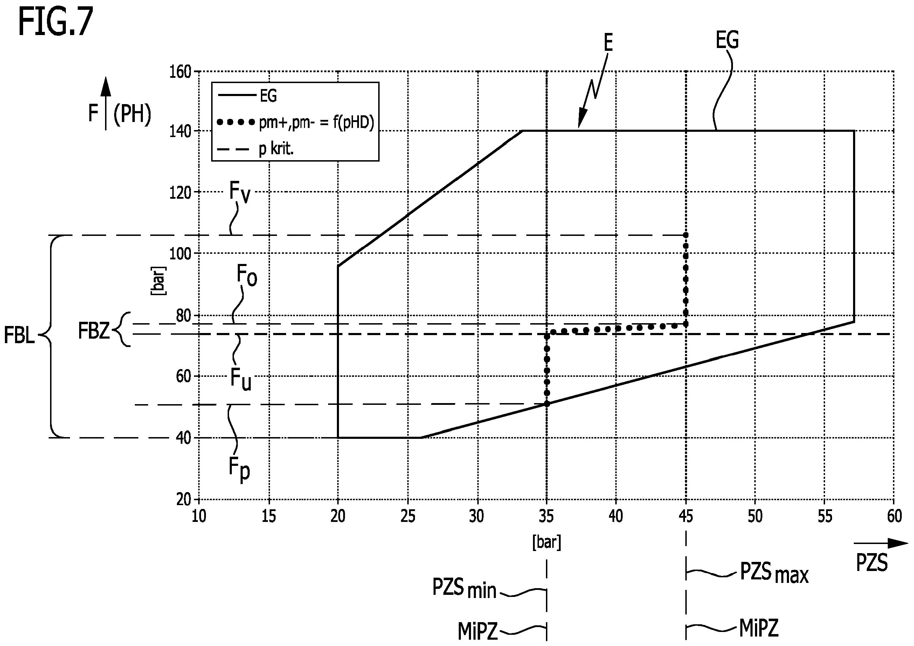

Bei einer fünften Variante, dargestellt in Fig. 7, ist der Führungsgrößenbereich FBZ auf einen engen Wertebereich an die kritische Führungsgröße FK angrenzend begrenzt, so dass bei über der kritischen Führungsgröße FK liegenden Werten der Führungsgröße F mit einem näherungsweise linearen Zusammenhang der Zwischendrucksollwert PZS bei geringfügigen Änderungen des Werts der Führungsgröße F der Zwischendrucksollwert PZS zwischen den Wert PZSₘᵢₙ und PZSₘₐₓ geändert wird, jedoch dann zwischen dem oberen Führungsgrößenwert Fₒ und dem Volllast entsprechenden Führungsgrößenwert Fᵥ sowie dem unteren Führungsgrößenwert Fu und der Führungsgröße Fₚ jeweils konstant gehalten wird.

Die Durchführung der Optimierung des Zwischendrucksollwerts PZS in Abhängigkeit von der Führungsgröße F durch die Steuerung 40 ist vorzugsweise abhängig von der Größe des Zusatzmassenstroms Z, der zur Verdichtung für den Parallelverdichter 164 im Zwischendrucksammler 42 anfällt, dabei ist beispielsweise davon auszugehen, dass bei einer Erhöhung des Zwischendrucksollwerts PZS bei gleichbleibenden Lastbedingungen des Systems und gleichbleibenden Wärmesenketemperaturen die Größe des Zusatzmassenstroms Z abnimmt.

Ist die Größe des Zusatzmassenstroms Z zu gering, so besteht die Gefahr, dass der Parallelverdichter 164 Schaden nimmt, oder durch Wechselbetrieb zwischen Parallelverdichtungs- und Flashgas/Bypass-Betrieb die Betriebsbedingungen des Kältesystems unvorteilhaft schwanken.

Aus diesem Grund ist vorzugsweise eine Überwachung der Drehzahl des Parallelverdichters 164 durch die Steuerung 40 mittels einer dem Frequenzumrichter FU zugeordneten Drehzahlerfassung D (Fig. 1) vorgesehen und bei Abfall der Drehzahl auf eine vorgegebene Minimaldrehzahl erfolgt ein Aussetzen der Durchführung der Optimierung des Zwischendrucksollwerts PZS durch die Steuerung 40 so lange, bis der Drehzahl des Parallelverdichters 164 wieder höher als die vorgegebene Minimaldrehzahl ist.

Die vorgegebene Minimaldrehzahl muss dabei nicht der minimal zulässigen Drehzahl des Parallelverdichters entsprechen, sondern kann auch von dieser abweichend, beispielsweise höher als diese, gewählt werden, je nachdem wie die Verhältnisse in der Kälteanlage gestaltet sind oder welche Betriebszustände auftreten können.

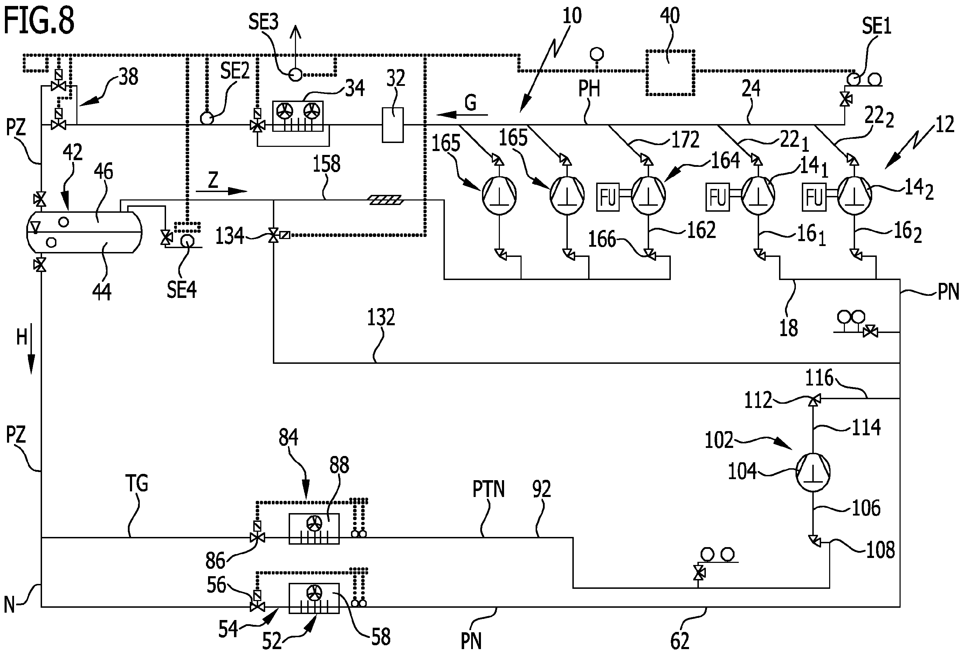

Bei einem zweiten Ausführungsbeispiel sind, wie in Fig. 8 dargestellt, zusätzlich zu dem Parallelverdichter 164 einer oder mehrere weitere Parallelverdichter 165 vorgesehen, welche beispielsweise mit einer festen Drehzahl arbeiten und - wenn zugeschaltet - eine durch deren Drehzahl festgelegte Verdichterleitung erbringen, zu welcher sich die Leistung des drehzahlvariablen Parallelverdichters 164 addiert, der durch den Frequenzumrichter FU drehzahlgeregelt arbeitet.

Um zu verhindern, dass in kurz aufeinanderfolgenden Zeitintervallen ein wechselndes Aus- und Einschalten eines oder mehrerer der Parallelverdichter 165 erfolgt, erfolgt seitens der Steuerung 40 ein Erfassen des Öffnungsgrades des Expansionsorgans 38 und bei einem Abfall des Öffnungsgrades auf einen vorgegebenen Minimalwert MO ein Aussetzen der Durchführung der Optimierung des Zwischendrucksollwerts PZS durch die Steuerung 40 so lange, bis der Öffnungsgrad des Expansionsorgans 38 wieder höhere Werte erreicht hat.

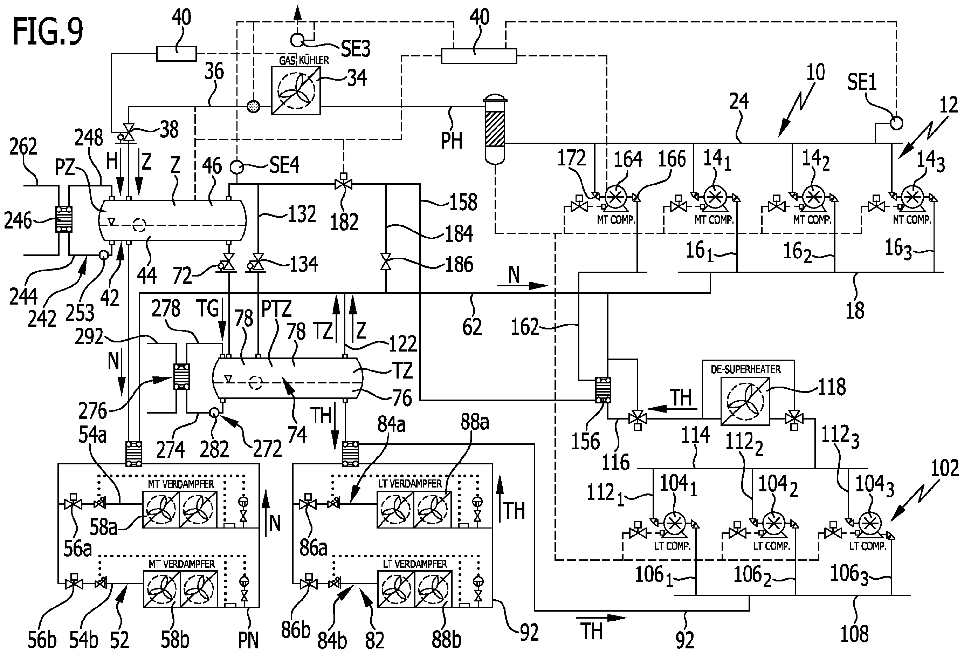

Bei dem dritten Ausführungsbeispiel der erfindungsgemäßen Kälteanlage, dargestellt in Fig. 9, umfasst der als Ganzes mit 12 bezeichnete Kältemittelverdichtereinheit, beispielsweise drei Kältemittelverdichter 14₁ bis 14₃, die alle parallel geschaltet in der Kältemittelverdichtereinheit 12 arbeiten.

Jeder der Kältemittelverdichter 14₁ bis 14₃ weist einen saugseitigen Anschluss 16₁ bis 16₃ auf, wobei alle saugseitigen Anschlüsse 16 der einzelnen Kältemittelverdichter 14 mit einer Sauganschlussleitung 18 der Kältemittelverdichtereinheit 12 verbunden sind.

Ferner weist jeder der Kältemittelverdichter 14 einen druckseitigen Anschluss 22₁ bis 22₃ auf, wobei alle druckseitigen Anschlüsse 22 der einzelnen Kältemittelverdichter 14 mit einer Druckanschlussleitung 24 der Kältemittelverdichtereinheit 12 verbunden sind.

Somit arbeiten alle drei Kältemittelverdichter 14 parallel, es besteht jedoch die Möglichkeit, die Verdichterleistung der Kältemittelverdichtereinheit 12 dadurch zu variieren, dass einzelne Kältemittelverdichter 14 arbeiten und einzelne Kältemittelverdichter 14 nicht arbeiten.

Ferner besteht die Möglichkeit, die Verdichterleistung der Kältemittelverdichtereinheit 12 durch eine drehzahlvariable Steuerung entweder eines arbeitenden Kältemittelverdichters 14 zu steuern oder die Drehzahl von einzeln arbeitenden Kältemittelverdichter 14 individuell zu steuern.

Bei dem dritten Ausführungsbeispiel strömt von dem das Bad 44 aus flüssigem Kältemittel bildenden Hauptmassenstrom H aus dem Zwischendrucksammler 42 ein Normalkühlmassenstrom N als Teilmassenstrom des Hauptmassenstroms H zu der als Ganzes mit 52 bezeichneten Normalkühlstufe, welche eine oder mehrere, beispielsweise zwei, parallel liegende und identisch aufgebaute Normalkühlexpansionseinheiten 54a und 54b aufweist.

Aus dem Hauptmassenstrom H im Zwischendrucksammler 42 wird nicht nur der Normalkühlmassenstrom N als Teilstrom abgezweigt, sondern als weiterer Teilstrom ein Tiefkühlgesamtmassenstrom TG, welcher einer Tiefkühlzwischendruckexpansionseinheit 72 zugeführt wird, welche ebenfalls beispielsweise als Expansionsorgan oder Expansionsventil ausgebildet ist.

Durch die Tiefkühlzwischendruckexpansionseinheit 72 erfolgt eine Expansion des Tiefkühlgesamtmassenstroms TG auf einen Tiefkühlzwischendruck PTZ, der vorzugsweise dem Niederdruck PN entspricht und beispielsweise zwischen 25 bar und 30 bar liegt, so dass aus dem aus flüssigem Kältemittel bestehenden Tiefkühlgesamtmassenstrom TG ein Tiefkühlhauptmassenstrom TH bei einer unterhalb der Temperatur des Hauptmassenstroms liegenden Temperatur sowie ein Tiefkühlzusatzmassenstrom TZ aus dampfförmigem Kältemittel entstehen, die gemeinsam einem Tiefkühlzwischendrucksammler 74 zugeführt werden, wobei der Tiefkühlzwischendrucksammler 74 ein Reservoir sowohl für den Tiefkühlhauptmassenstrom TH als auch für den Tiefkühlzusatzmassenstrom TZ aufweist, diese sammelt und voneinander trennt, wobei der Tiefkühlhauptmassenstrom TH sich als Bad 76 aus flüssigem Kältemittel ausbildet, während der Tiefkühlzusatzmassenstrom TZ ein über dem Bad 76 liegendes Gasvolumen 78 aus gasförmigem Kältemittel in dem Tiefkühlzwischendrucksammler 74 bildet.

Somit erfolgt in dem Tiefkühlzwischendrucksammler 74 eine Trennung des Tiefkühlhauptmassenstroms TH vom Tiefkühlzusatzmassenstrom TZ.

Der Tiefkühlhauptmassenstrom TH wird, ausgehend von dem Tiefkühlzwischendrucksammler 74, einer Tiefkühlstufe 82 zugeführt, welche eine oder mehrere, beispielsweise zwei, parallele Tiefkühlexpansionseinheiten 84 aufweist, die parallel geschaltet sind, wobei jede dieser Tiefkühlexpansionseinheiten 84 ein Tiefkühlexpansionsorgan 86 aufweist, welches einen Teil des Tiefkühlmassenstroms TH von dem Tiefkühlzwischendruck PTZ auf einen Tiefkühlniederdruck PTN expandiert und somit abkühlt, wobei der Tiefkühlniederdruck PTN in allen Betriebszuständen möglichst konstant gehalten wird und beispielsweise zwischen 10 bar und 15 bar liegen, wobei die Abweichungen maximal ± 3 bar betragen.

Das auf Tiefkühlniederdruck PTN abgekühlte Kältemittel wird dann nachfolgend einem tiefkühlniederdruckseitigen Wärmeübertrager 88 zugeführt und ist in dem jeweiligen Tiefkühlwärmeübertrager 88 in der Lage, bei Tiefkühltemperaturen Wärme aufzunehmen, wodurch die Enthalpie erhöht wird.

Der insgesamt in der Tiefkühlstufe 82 auf Tiefkühlniederdruck PTN expandierte Tiefkühlhauptmassenstrom TH wird einer Tiefkühlsaugleitung 92 zugeführt, die mit beiden Tiefkühlwärmeübertrager 88 verbunden ist und den auf Tiefkühlniederdruck PTN expandierten Tiefkühlhauptmassenstrom TH einer als Ganzes mit 102 bezeichneten Tiefkühlverdichtereinheit zuführt, welche beispielsweise mehrere parallel arbeitende Tiefkühlverdichter 104₁ bis 104₃ aufweist, die jeweils saugseitige Anschlüsse 106₁ bis 106₃ aufweisen, welche mit einem Tiefkühlsauganschluss 108 der Tiefkühlverdichtereinheit 102 verbunden sind, der seinerseits wiederum mit der Tiefkühlsaugleitung 92 verbunden ist und den auf Tiefkühlniederdruck PTN expandierten Tiefkühlhauptmassenstrom TH aufnimmt.

Die Tiefkühlverdichter 104 weisen ferner druckseitige Anschlüsse 112₁ bis 112₃ auf, die ihrerseits wiederum mit einer Tiefkühldruckanschlussleitung 114 der Tiefkühlverdichtereinheit 102 verbunden sind.

Die Tiefkühlverdichtereinheit 102 verdichtet den Tiefkühlhauptmassenstrom TH, welcher die Tiefkühlstufe 82 durchströmt hat und auf den Tiefkühlniederdruck PTN expandiert wurde, wiederum auf den Normalkühlniederdruck PN, wobei der auf den Normalkühlniederdruck PN verdichtete Tiefkühlmassenstrom TH über eine Leitung 116 der Sauganschlussleitung 18 der Kältemittelverdichtereinheit 12 zugeführt wird.

In der Leitung 116 ist gegebenenfalls noch ein Wärmeübertrager 118 wahlweise zuschaltbar, welcher eine gegebenenfalls günstige Kühlung des verdichteten Tiefkühlhauptmassenstroms TH erlaubt.

Bei der bisherigen Erläuterung der Funktion des dritten Ausführungsbeispiels des Kältemittelkreislaufes 10 wurden keine Angaben zur Führung des Tiefkühlzusatzmassenstroms TZ und des Zusatzmassenstroms Z gemacht.

Um den Tiefkühlzusatzmassenstrom TZ, der in dem Tiefkühlzwischendrucksammler 74 auf dem Tiefkühlzwischendruck PTZ vorliegt, abzuführen, um den Tiefkühlzwischendruck PTZ möglichst konstant zu halten, ist der Tiefkühlzwischendrucksammler 74 mit einer Abfuhrleitung 122 versehen, welche das Gasvolumen 78 im Tiefkühlzwischendrucksammler 74 mit der Saugleitung 62 verbindet, welche von der Normalkühlstufe 52 zum Sauganschluss 18 der Kältemittelverdichtereinheit 12 führt.

Somit entspricht der Tiefkühlzwischendruck PTZ ungefähr dem Normalkühlniederdruck PN.

Um den Zusatzmassenstrom Z aus dem Zwischendrucksammler 42 abzuführen und den Zwischendruck PZ möglichst konstant zu halten, mündet eine Abfuhrleitung 132 einerseits in das Gasvolumen 46 des Zwischendrucksammlers 42 und andererseits in das Gasvolumen 78 im Tiefkühlzwischendrucksammler 74, wobei zusätzlich in der Abfuhrleitung 132 noch ein Expansionsorgan 134 vorgesehen ist, welches den aus dem Zwischendrucksammler 42 austretenden Zusatzmassenstrom Z von dem Zwischendruck PZ auf den Tiefkühlzwischendruck PTZ und somit von der gesättigten Gasphase ins Nassdampfgebiet expandiert und somit eine zusätzliche Abkühlung desselben bewirkt, so dass der Zusatzmassenstrom Z noch unter generieren von Flüssigkeit weiter abgekühlt wird, bevor er in den Tiefkühlzwischendrucksammler 74 eintritt.

Das Expansionsorgan 134 regelt den Zwischendruck PZ im Zwischendrucksammler 42 auf einen vorgegebenen Wert.

Über die Tiefkühlzwischendruckexpansionseinheit 72 wird das Volumen des Bades 44 aus flüssigem Kältemittel im Zwischendrucksammler 42 und das Volumen des Bades 76 aus flüssigem Kältemittel im Tiefkühlzwischendrucksammler 72 so eingestellt, dass einerseits das Bad 74 ein ausreichend großes Volumen hat und andererseits das Bad 44 ebenfalls ein ausreichend großes Volumen aufweist.

Insbesondere ist vorgesehen, dass der von dem Expansionsorgan 134 expandierte Teil des Zusatzmassenstroms Z dem Gasvolumen 78 im Tiefkühlzwischendrucksammler 74 in einer Abscheidehöhe von 300 mm bis 400 mm über dem konstruktiv vorgegebenen maximal erreichbaren Flüssigkeitsniveau des Bades 76 des Tiefkühlhauptmassenstroms TH im Tiefkühlzwischendrucksammler 74 zugeführt wird.

Bei einer derartigen Zufuhr des expandierten Zusatzmassenstroms Z ist mit großer Wahrscheinlichkeit mit einer ausreichenden Abscheidung der flüssigen Phase im Tiefkühlzwischendrucksammler 74 zu rechnen.

Die Einmündung der Abfuhrleitung 132 in den Tiefkühlzwischendrucksammler 74 liegt dabei so, dass der in den Tiefkühlzwischendrucksammler 74 eintretende Zusatzmassenstrom Z ausreichend weit von der Abfuhrleitung 122, insbesondere einer Einmündung der Abfuhrleitung 122 in den Tiefkühlzwischendrucksammler 74, entfernt ist, um sicherzustellen, dass sich aus dem durch das Expansionsorgan 134 abgekühlten Zusatzmassenstrom Z in dem Gasvolumen 78 des Tiefkühlzwischendrucksammlers 74 der mitgeführte und durch die Abkühlung aufgrund der Expansion im Expansionsorgan 134 gebildete Flüssigkeitsanteil in dem Tiefkühlzwischendrucksammler 74 abscheidet und dann danach der verbleibende gasförmige Zusatzmassenstrom Z wiederum durch die Abfuhrleitung 122 in die Saugleitung 62 eintritt.

Der die Abfuhrleitung 122 durchströmende Zusatzmassenstrom Z' ist dabei reduziert um die Masse des in dem Tiefkühlzwischendrucksammler 74 abgeschiedenen Flüssigkeitsanteils des Zusatzmassenstroms Z, der allerdings im Bereich von weniger als 10% liegt, so dass näherungsweise der Zusatzmassenstrom Z' dem Zusatzmassenstrom Z entspricht.

Somit durchströmt die Abfuhrleitung 122 nicht nur den Tiefkühlzusatzmassenstrom TZ, sondern auch den durch das Gasvolumen 78 im Tiefkühlzwischendrucksammler 74 hindurchgeführten im Wesentlichen gasförmige Anteil des Zusatzmassenstroms Z, die dann beide in die Saugleitung 62 eintreten.

Vorzugsweise beträgt der Flüssigkeitsanteil der die Abfuhrleitung 122 durchströmenden Zusatzmassenströme, nämlich des Tiefkühlzusatzmassenstroms TZ und des Zusatzmassenstroms Z', insgesamt weniger als 5 m-% (Massenprozent), noch besser weniger als 3 m-% und vorzugsweise weniger als 1 m-% der insgesamt die Abfuhrleitung 122 durchsetzenden Massenströme, so dass sichergestellt ist, dass die Kältemittelverdichter 14 der Kältemittelverdichtereinheit 10 in allen Betriebszuständen im Wesentlichen flüssigkeitsfreies Kältemittel ansaugen.

Die Angabe der Massenströme ist ein Mittelwert, der sich bei einem Betrieb des Kältekreislaufs 10 in der beschriebenen Art und Weise während der jeweiligen Betriebszeiträume einstellt.

Besonders vorteilhaft lässt sich eine Abscheidung der Flüssigkeitsanteile des Zusatzmassenstroms Z in dem Gasvolumen 78 des Tiefkühlzwischendrucksammlers 74 dann erreichen, wenn die Strömungsgeschwindigkeit des Kältemittels in der Abfuhrleitung kleiner ist als 2 m/s (Meter pro Sekunde), noch besser kleiner als 0,5 m/s und vorzugsweise kleiner als 0,3 m/s ist.

Im Gegensatz zum ersten Ausführungsbeispiel ist bei dem dritten Ausführungsbeispiel in der Aufnahmeleitung 158 ein Schaltventil 182 vorgesehen, welches es erlaubt, eine Aufnahme von Kältemittel aus dem Gasvolumen 46 des Zwischendrucksammlers 42 zu unterbinden.

Zusätzlich ist zwischen dem Schaltventil 182 und einem einerseits zwischen der Aufnahmeleitung 158 und der Saugleitung 162 sowie andererseits in der Leitung 116 angeordneten Wärmeübertrager 156 eine von der Aufnahmeleitung 158 abzweigende Verbindungsleitung 184 zur Saugleitung 62 vorgesehen, in welcher ein als Ganzes mit 186 bezeichnetes Rückschlagventil vorgesehen ist, welches lediglich einen Durchfluss von Kältemittel von der Saugleitung 62 in Richtung der Aufnahmeleitung 158 erlaubt.

Durch Verschließen des Schaltventils 182 besteht bei einem Betrieb des Parallelverdichters 164 die Möglichkeit, die Kältemittelverdichter 14 der Kältemittelverdichtereinheit 12 hinsichtlich ihrer Verdichterleistung zu unterstützen, da in diesem Fall über das Rückschlagventil 186 Kältemittel aus der Saugleitung 62 in die Aufnahmeleitung 158 eingesaugt werden kann und über die Saugleitung 162 dem vorzugsweise drehzahlgeregelten Parallelverdichter 164 zugeführt werden kann, der somit parallel zu den Kältemittelverdichtern 14 der Kältemittelverdichtereinheit 12 arbeitet, wobei vorzugsweise einer der Kältemittelverdichter 14 ebenfalls drehzahlgeregelt ist, so dass insgesamt zwei jeweils leistungsgeregelter oder drehzahlgeregelte Kältemittelverdichter zur Verfügung stehen.

Ferner ist die Steuerung 40 vorgesehen, welche einerseits das Schaltventil 182 und andererseits den Parallelverdichter 164 ansteuert, und zwar entsprechend den vorhandenen Lastzuständen.

So wird bei Volllastbetrieb, beispielsweise im Sommer, der Kältemittelkreislauf 10 derart betrieben, dass der Hochdruck PH beispielsweise bei ungefähr 90 bar liegt.

Ferner liegt beispielsweise der Niederdruck PN bei ungefähr 25 bar.

In diesem Fall arbeitet der Parallelverdichter 164 bei geöffnetem Schaltventil 182 im Parallelverdichtungsbetrieb, so dass der gesamte Zusatzmassenstrom Z über die Aufnahmeleitung 158, den Wärmeübertrager 156 und die Saugleitung 162 dem Sauganschluss 166 des Parallelverdichters 164 zugeführt wird, der dann den Zusatzmassenstrom auf den Hochdruck PH verdichtet, der am Druckanschluss 172 desselben anliegt.

Im niedrigsten Teillastbetrieb, beispielsweise im Winter, wird der Hochdruck PH jedoch abgesenkt, beispielsweise auf 40 bar. In diesem Fall wird durch die Steuerung 192 das Schaltventil 182 geschlossen und der Parallelverdichter 164 arbeitet in Flashgas/Bypass-Betrieb parallel zu der Kältemittelverdichtereinheit 12, wobei hierzu über die Zweigleitung 184 und das Rückschlagventil 186 Kältemittel aus der Saugleitung 62 in die Aufnahmeleitung 158 eingesaugt wird, den Wärmeübertrager 156 durchströmt und über die Saugleitung 162 dem Sauganschluss 166 des Parallelverdichters 164 zugeführt wird.

In diesem Fall strömt der Zusatzmassenstrom Z über das Expansionsorgan 134, welches in der Abfuhrleitung 132 angeordnet ist, von dem Gasvolumen 46 im Zwischendrucksammler 42 in das Gasvolumen 78 des Tiefkühlzwischendrucksammlers 74, wobei in dem Gasvolumen 78 im Tiefkühlzwischendrucksammler 74 ein Abscheiden von durch Expansion des Zusatzmassenstroms Z entstehender Flüssigkeit in dem Tiefkühlzwischendrucksammler 74 abgeschieden wird.

Somit saugt der Parallelverdichter 164 im Flashgas/Bypass-Betrieb Kältemittel aus der Saugleitung 62 bei Niederdruck PN an und verdichtet das Kältemittel auf den Hochdruck PH, der allerdings lediglich im Bereich von beispielsweise in diesem Fall 45 bar liegt.

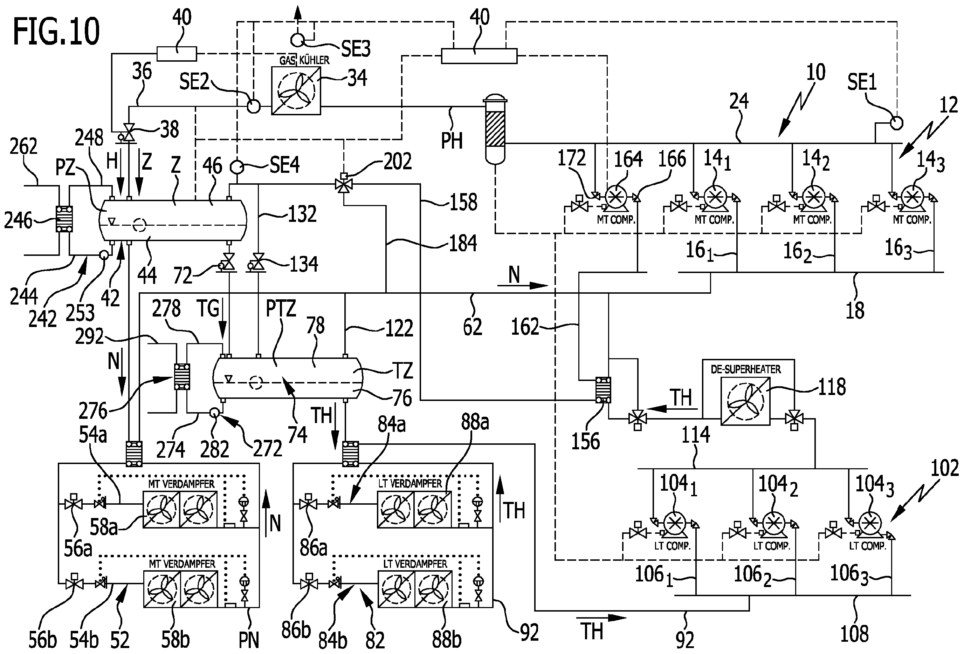

Bei einem vierten Ausführungsbeispiel einer erfindungsgemäßen Kälteanlage, dargestellt in Fig. 10, sind diejenigen Elemente, die mit denen der voranstehenden Ausführungsbeispielen identisch sind, mit denselben Bezugszeichen versehen, so dass diesbezüglich vollinhaltlich auf die Ausführungen zu den voranstehenden Ausführungsbeispielen Bezug genommen wird.

Im Gegensatz zum dritten Ausführungsbeispiel ist anstelle des Schaltventils 182 ein Dreiwegeventil 202 in der Aufnahmeleitung 158 vorgesehen, welches in der Lage ist, entweder die Zweigleitung 184 mit der Aufnahmeleitung 158 zu verbinden und die Verbindung zwischen der Aufnahmeleitung 158 und der Abfuhrleitung 132 zu unterbrechen oder die Verbindung zwischen der Aufnahmeleitung 158 und der Abfuhrleitung 132 herzustellen und dafür die Verbindung zwischen der Zweigleitung 184 und der Aufnahmeleitung 158 zu unterbrechen.

Dieses Dreiwegeventil 202 ist dabei ebenfalls durch die Steuerung 40 steuerbar, die außerdem auch den Parallelverdichter 164 ansteuert, in gleicher Weise wie dies im Zusammenhang mit dem dritten Ausführungsbeispiel beschrieben wurde, wobei nunmehr anstelle der Ansteuerung des Schaltventils 182 eine Ansteuerung des Dreiwegeventils 202 erfolgt.

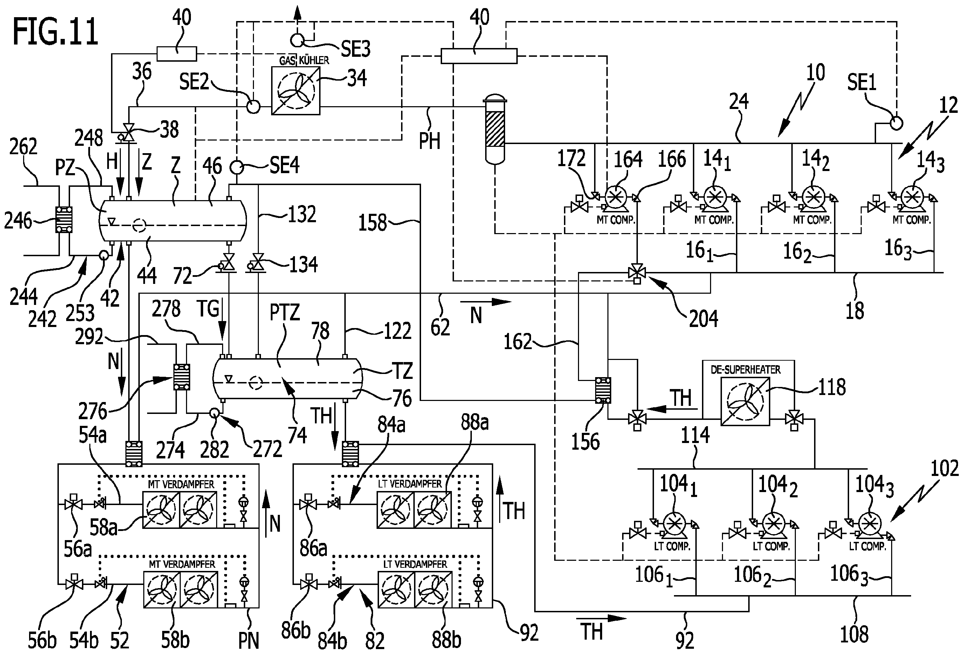

Bei einem fünften Ausführungsbeispiel einer erfindungsgemäßen Kälteanlage, dargestellt in Fig. 11, sind diejenigen Elemente, die mit denen der voranstehenden Ausführungsbeispiele identisch sind, mit demselben Bezugszeichen versehen, so dass diesbezüglich vollinhaltlich auf die Ausführungen zu den voranstehenden Ausführungsbeispielen Bezug genommen werden kann.

Im Unterschied zum vierten Ausführungsbeispiel ist anstelle des Dreiwegeventils 202 ein Dreiwegeventil 204 vorgesehen, welches einerseits mit der Sauganschlussleitung 18 andererseits mit der Saugleitung 162 verbunden ist und in der Lage ist, eine dieser Leitungen 18 oder 162 mit dem Sauganschluss 166 des Parallelverdichters 164 zu verbinden.

Damit schafft das Dreiwegeventil 204 die Möglichkeit, dem Parallelverdichter 164 beim Parallelverdichtungsbetrieb entweder einen Teil des Zusatzmassenstroms Z oder den gesamten Zusatzmassenstrom Z über die Saugleitung 162, den Wärmeübertrager 156 und die Aufnahmeleitung 158 zuzuführen oder im Flashgas/Bypass-Betrieb dem Parallelverdichter 164 über die Sauganschlussleitung 18 expandiertes Kältemittel aus dem Normalkühlmassenstrom N und dem Tiefkühlhauptmassenstrom TH zum Verdichten zuzuführen.

Das Dreiwegeventil 204 ist dabei ebenfalls durch die Steuerung 40 steuerbar, die außerdem auch den Parallelverdichter 164 ansteuert, in gleicher Weise wie dies im Zusammenhang mit dem vierten Ausführungsbeispiel beschrieben wurde, wobei anstelle der Ansteuerung des Schaltventils 182 eine Ansteuerung des Dreiwegeventils 204 erfolgt, um dieselben Betriebszustände zu realisieren.

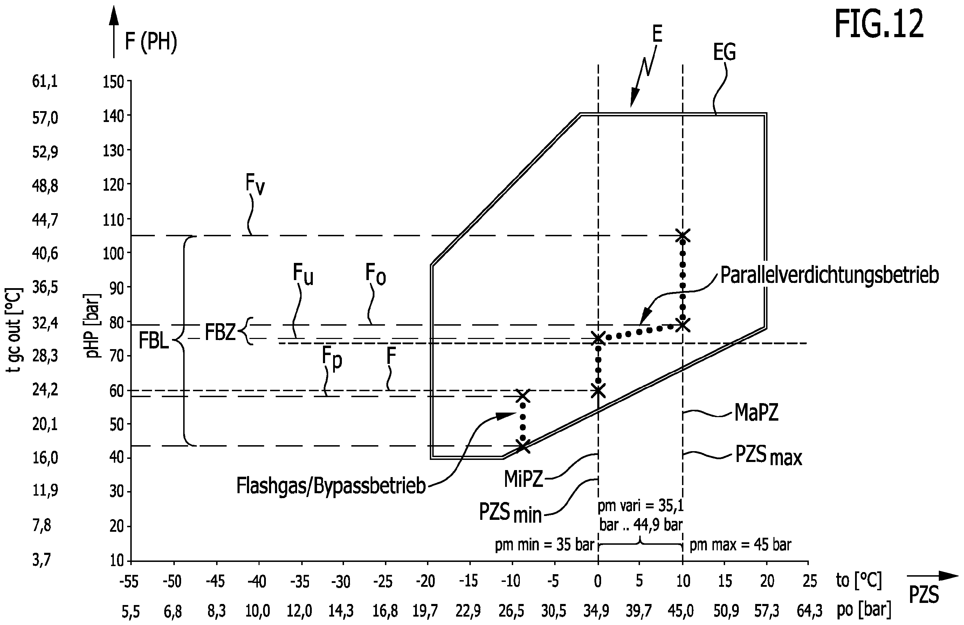

Bei dem dritten bis fünften Ausführungsbeispiel wird der Parallelverdichter 164 bei Werten der Führungsgröße F unterhalb der parallelverdichtungsbegrenzenden Führungsgröße Fₚ im Flashgas/Bypass-Betrieb von der Steuerung 40 nicht abgeschaltet sondern zur Unterstützung der Kältemittelverdichtereinheit 12 eingesetzt und verdichtet dabei Kältemittel aus dem Normalkühlmassenstrom N und dem Tiefkühlmassenstrom TH von Niederdruck PN auf Hochdruck PH, was durch das Einsatzdiagramm E - wie in Fig. 12 dargestellt - beschädigungsfrei möglich ist.

Außerdem ermittelt die Steuerung 40 im Parallelverdichtungsbetrieb Zwischendrucksollwerte PZS in Abhängigkeit von der Führungsgröße F analog der vierten Variante gemäß dem ersten Ausführungsbeispiel.

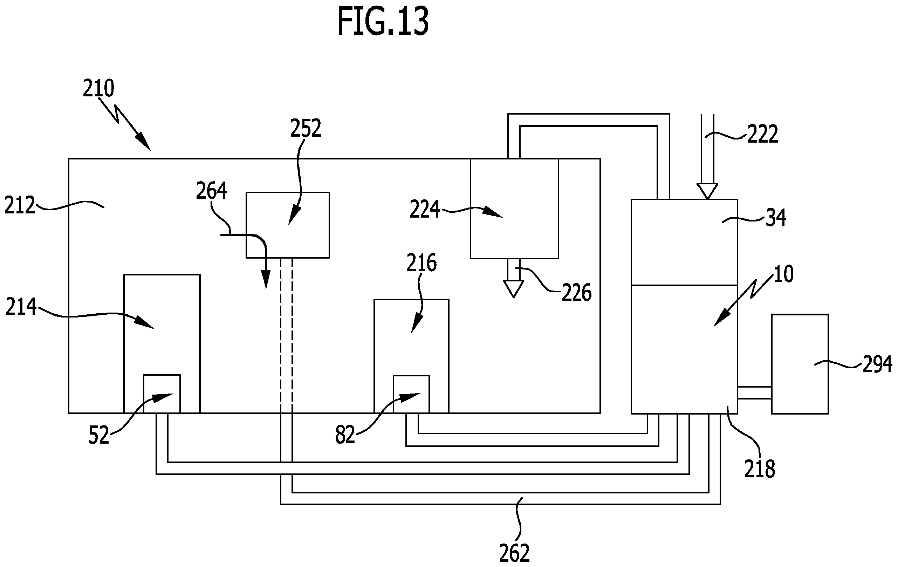

Eine Kälteanlage 10 gemäß den vorstehend beschriebenen Ausführungsbeispielen lässt sich - wie in Fig. 13 dargestellt - insbesondere zum energieoptimierten Betrieb eines Gebäudes 210, insbesondere eines Lebensmittelmarkts, einsetzen, wobei in einem Innenraum 212 des Gebäudes 210 Einrichtungen vorgesehen sind.

In dem Innenraum 212 des Gebäudes 210 ist beispielsweise eine Kühleinrichtung 214 vorgesehen, in welcher Kühlgut oder Objekte, beispielsweise Lebensmittel, auf einer Normalkühltemperatur, das heißt einer Temperatur im Bereich von üblicherweise 0°C bis 5°C gehalten werden, wobei die Kühlung dieser Kühleinrichtung durch die Normalkühlstufe 52 der erfindungsgemäßen Kälteanlage 10 erfolgt.

Ferner ist in dem Innenraum 212 eine Tiefkühleinrichtung 216 vorgesehen, in welcher tiefgekühltes Gut oder Objekte, beispielsweise Gefriergut, auf Tiefkühltemperatur gehalten wird, beispielsweise bei einer Temperatur im Bereich von -30°C bis -10°C.

Die Kühlung der Tiefkühleinrichtung 216 erfolgt dabei durch die Tiefkühlstufe 82 der erfindungsgemäßen Kälteanlage 10.

Bis auf die Normalkühlstufe 52, die Tiefkühlstufe 82 und den Wärmeübertrager 34 sind vorzugsweise alle übrigen Komponenten der erfindungsgemäßen Kälteanlage 10 in einem Raum 218 angeordnet, der entweder Teil des Gebäudes 210 sein kann oder neben dem Gebäude 210 angeordnet werden kann.

Der außerhalb des Raums 218 angeordnete Wärmeübertrager 34 saugt seinerseits beispielsweise Umgebungsluft 222 ein, um mit dieser Umgebungsluft 222 das unter Hochdruck PH stehende Kältemittel zu kühlen.

Um das Gebäude 210 energieeffizient betreiben zu können, ist dem hochdruckseitigen Wärmeübertrager 34, der außerhalb des Gebäudes 210 angeordnet ist und zum Wärmeaustausch mit der Umgebungsluft 222 dient, ein Wärmeübertrager 224 parallelgeschaltet, welcher dem Gebäude 210 zugeordnet ist und dazu dient, in den Innenraum 212 des Gebäudes 210 abzugebende Innenluft 226 aufzuwärmen, wobei hierzu der Wärmeübertrager 224 je nach Bedarf Umgebungsluft 222 des Gebäudes 210 und/oder Innenluft des Gebäudes 210 zum Aufheizen ansaugen kann.

Somit kann die auf der Hochdruckseite der erfindungsgemäßen Kälteanlagen 10 anfallende Wärme energieeffizient zur Gebäudeheizung genutzt werden, insbesondere in Zeiten, in denen die Außentemperatur des Gebäudes 210 unterhalb einer im Innenraum 212 desselben anzustrebenden Raumtemperatur liegt.

Darüber hinaus ist in dem Gebäude 210, insbesondere in dem Innenraum 212 desselben, noch ein Kühlwärmeübertrager 252 vorgesehen, welcher dazu dient, den Innenraum 212 des Gebäudes 210 bei zu hohen Außentemperaturen oder bei Sonneneinstrahlung zu kühlen.

Der Kühlwärmeübertrager 252 wird dabei beispielsweise gespeist durch einen dem Zwischendrucksammler 42 zugeordneten Parallelkreislauf 242, welcher aus dem Bad 44 des flüssigen Kältemittels im Zwischendrucksammler 42 über eine Zuleitung 244 flüssiges Kältemittel bei einer dem Zwischendruck PZ im Zwischendrucksammler 42 entsprechenden Temperatur aufnimmt, in einem Verdampfer 246 verdampft und über eine Ableitung 248 wieder dem Gasvolumen 46 des Zwischendrucksammlers 42 zuführt.

Dabei ist vorzugsweise der Verdampfer 246 als überfluteter Verdampfer ausgeführt, welcher durch aufgrund der Schwerkraft in diesen eintretendes flüssiges Kältemittel gekühlt wird, wobei dieses Kältemittel dann in diesem Verdampfer 246 verdampft.

Vorzugsweise ist zur Steuerung oder Regelung des Parallelkreislaufs 242 noch ein Steuerungselement 253 vorgesehen, welches im einfachsten Fall ein Ventil oder im etwas komplexeren Fall eine leistungsgesteuerte Pumpe für flüssiges Kältemittel sein kann.

Der Verdampfer 246 kühlt beispielsweise seinerseits einen Übertragerkreislauf 262, in welchem beispielsweise ein Wärmeübertragermedium, wie Luft, Sole oder Wasser zirkuliert, das dann seinerseits den Kühlwärmeübertrager 252 im Gebäude 210 durchströmt und dort zur Kühlung eines Luftstroms 264 eingesetzt werden kann, wobei dieser Luftstrom 264 im einfachsten Fall ein Luftstrom aus umgewälzter Innenluft 226 des Gebäudes 210 sein kann.

Typischerweise liegen im Zwischendrucksammler 42 Temperaturen zwischen 5°C und 0°C vor, so dass mit diesen Temperaturen der Kühlwärmeübertrager 252 betrieben und somit in einfacher Weise der Luftstrom 264, welcher den Kühlwärmeübertrager 252 durchströmt, gekühlt werden kann.

Eine derartige Kühlung bedingt andererseits wiederum einen erhöhten Zusatzmassenstrom Z, der im Zwischendrucksammler 42 anfällt und dabei entweder über die Abfuhrleitung 132 und das Expansionsorgan 134 in den Tiefkühlzwischendrucksammler 74 eingeleitet werden muss und dann nach Durchströmen desselben wiederum von der Kältemittelverdichtereinheit 12 verdichtet werden muss oder über die Zusatzmassenstromabfuhreinheit 160 abgeführt werden muss. In jedem Fall fällt dabei mehr Wärme auf der Hochdruckseite an, die entweder von dem Wärmeübertrager 34 an die Umgebung des Gebäudes 210 abgeführt werden kann oder gegebenenfalls bei günstigen Verhältnissen von dem Wärmeübertrager 224 zur Aufheizung des Gebäudes 210 genutzt werden kann, zum Beispiel nach einer Entfeuchtung von Außenluft, welche der Innenluft 226 dem Gebäude 210 als Zuluft zugeführt werden kann.

Ferner ist auch dem Tiefkühlzwischendrucksammler 74 ein Parallelkreislauf 272 zugeordnet, welcher eine von dem Bad 76 im Tiefkühlzwischendrucksammler 74 flüssiges Kältemittel aufnehmende Zuleitung 274 aufweist, welche dieses Kältemittel einem Verdampfer 276 zuführt, der seinerseits das flüssige Kältemittel verdampft und über eine Ableitung 278 wiederum dem Gasvolumen 78 im Tiefkühlzwischendrucksammler 74 zuführt.

Auch bei diesem Parallelkreislauf 272 ist der Verdampfer 276 beispielsweise als überfluteter Verdampfer ausgebildet, so dass das flüssige Kältemittel aufgrund der Schwerkraft in diesen eintritt, im Verdampfer 276 verdampft wird und dann gasförmig über die Zuleitung 274 wieder dem Gasvolumen 78 im Tiefkühlzwischendrucksammler 74 zugeführt wird.

Zur Steuerung oder Regelung des Parallelkreislaufs 272 ist in der Zuleitung 274 ebenfalls ein Steuerelement 282 vorgesehen, das entweder in Form eines Schaltventils oder gegebenenfalls auch in Form einer leistungsgesteuerten Pumpe ausgeführt sein kann.

Der Verdampfer 276 ist ferner gekoppelt mit einem Kreislauf 292, in welchem ein externer Wärmeübertrager 294 angeordnet ist, der außerhalb des Gebäudes 210 und auch außerhalb des Raums 218 angeordnet ist.

Mit diesem Wärmeübertrager 294 besteht beispielsweise die Möglichkeit, bei tiefen Umgebungstemperaturen Wärme aufzunehmen und diese Wärme dem Kältemittelkreislauf 12 zuzuführen, um wiederum mehr Wärme an dem Wärmeübertrager 224 zur Kühlung des auf Hochdruck PH verdichteten Kältemittels zur Verfügung zu haben und damit beispielsweise im Winter bei niedrigen Außentemperaturen den Innenraum 212 des Gebäudes 210 aufheizen zu können.

Das heißt, dass in diesem Fall die erfindungsgemäße Kälteanlage 10 nicht nur dazu dient, in dem Gebäude 210 die Kühleinrichtung 214 und die Tiefkühleinrichtung 216 zu betreiben, sondern auch gleichzeitig den Innenraum 212 des Gebäudes über den Wärmeübertrager 224 aufzuheizen.

Beispielsweise liegt bei üblichen Drücken im Tiefkühlzwischendrucksammler 74 das Kältemittel bei einer Temperatur zwischen -12°C und -5°C vor, so dass bei Außentemperaturen, die höher sind als die gesättigte Temperatur im Tiefkühlzwischendrucksammler 74, stets über den Wärmeübertrager 294 Wärme aufgenommen werden kann, die wiederum dann über den Wärmeübertrager 224 in den Innenraum 212 des Gebäudes 210 abgegeben werden kann.

## Patentansprüche

1. Kälteanlage umfassend eine Steuerung (40), einen Kältemittelkreislauf (10), in welchem ein Gesamtmassenstrom (G) eines Kältemittels geführt ist, einen in dem Kältemittelkreislauf (10) angeordneten, hochdruckseitiges Kältemittel kühlenden Wärmeübertrager (34), ein im Kältemittelkreislauf (10) angeordnetes Expansionsorgan (38), das im aktiven Zustand den Gesamtmassenstrom (G) des Kältemittels durch Expansion kühlt und dabei einen Hauptmassenstrom (H) aus flüssigem Kältemittel und einen Zusatzmassenstrom (Z) aus gasförmigem Kältemittel erzeugt, die in einen Zwischendrucksammler (42) eintreten und in diesem in den Hauptmassenstrom (H) und den Zusatzmassenstrom (Z) getrennt werden, mindestens eine Normalkühlstufe, welche aus dem Hauptmassenstrom (H) in dem Zwischendrucksammler (42) einen Normalkühlmassenstrom (N) abführt und in mindestens einer Normalkühlexpansionseinheit (54) auf einen Niederdruck (PN) expandiert und dabei Kälteleistung zur Normalkühlung zur Verfügung stellt, eine den Normalkühlmassenstrom (N) von Niederdruck (PN) auf Hochdruck (PH) verdichtende Kältemittelverdichtereinheit (12), und einen Parallelverdichter (164), welcher in einem Parallelverdichtungsbetrieb des Kältemittelkreislaufs (10) Kältemittel aus dem Zwischendrucksammler (42) ansaugt und auf Hochdruck (PH) verdichtet, wobei der Parallelverdichter (164) durch die Steuerung (40) leistungsgesteuert ist, die mindestens eine einen Lastzustand des Kältemittelkreislaufs (10) repräsentierende Führungsgröße (F) ermittelt, die mindestens in einem Parallelverdichterbetrieb auf der Basis der mindestens einen Führungsgröße (F) einen Zwischendrucksollwert (PZS) ermittelt, und die mindestens im Parallelverdichterbetrieb den Zwischendruck (PZ) entsprechend dem Zwischendrucksollwert (PZS) regelt,
**dadurch gekennzeichnet , dass** die Steuerung (40) zur Ermittlung des Zwischendrucksollwerts (PZS) nur innerhalb eines zwischendruckvariierenden Führungsgrößenbereichs (FBZ) liegende Führungsgrößen (F) berücksichtigt, dass der zwischendruckvariierende Führungsgrößenbereich (FBZ) ein Teilbereich eines lastbedingten Führungsgrößenbereichs (FBL) ist, dass die Steuerung (40) nur Zwischendrucksollwerte (PZS) zur Regelung des Zwischendrucks (PZ) heranzieht, die in einem sich von einem Minimalzwischendruck (MiPZ) bis zu einem Maximalzwischendruck (MaPZ) erstreckenden Bereich liegen und dass innerhalb des zwischendruckvariierenden Führungsgrößenbereichs (FBZ) eine Zunahme des Werts der Führungsgröße (F) zu einer Zunahme des Wertes des Zwischendrucksollwerts (PZS) führt.

2. Kälteanlage nach Anspruch 1, **dadurch gekennzeichnet, dass** der Zusammenhang zwischen der Führungsgröße (F) und dem mit dieser sich ändernden Zwischendrucksollwert (PZS) so ermittelt wird, dass sich bezogen auf den Wirkungsgrad bei konstantem Zwischendruck (PZ) im Parallelverdichtungsbetrieb durch den variierenden Zwischendrucksollwert (PZS) eine Steigerung des Wirkungsgrades ergibt.

3. Kälteanlage nach einem der voranstehenden Ansprüche, **dadurch gekennzeichnet, dass** innerhalb des Führungsgrößenbereichs (FBZ) ein linearer Zusammenhang zwischen dem Wert der Führungsgröße (F) und dem Zwischendrucksollwert (PZS) besteht.

4. Kälteanlage nach einem der voranstehenden Ansprüche, **dadurch gekennzeichnet, dass** innerhalb des zwischendruckvariierenden Führungsgrößenbereichs (FBZ) der Zusammenhang zwischen dem Wert der Führungsgröße (F) und dem Zwischendrucksollwert (PZS) nichtlinear ist.

5. Kälteanlage nach einem der voranstehenden Ansprüche, **dadurch gekennzeichnet, dass** der Zusammenhang zwischen dem Wert der Führungsgröße (F) und dem Zwischendrucksollwert (PZS) durch die Einsatzgrenze (EG) des Parallelverdichters (164, 165) vorgegeben ist.

6. Kälteanlage nach einem der voranstehenden Ansprüche, **dadurch gekennzeichnet, dass** der Zusammenhang zwischen der Führungsgröße (F) und dem Zwischendrucksollwert (PZS) dadurch vorgegeben ist, dass zu den jeweiligen Werten der Führungsgröße (F) der jeweils größtmögliche Wert des Zwischendrucksollwerts (PZS) innerhalb der Einsatzgrenze (EG) des Parallelverdichters (164) ausgewählt wird.

7. Kälteanlage nach einem der voranstehenden Ansprüche, **dadurch gekennzeichnet, dass** die Werte für den Zwischendrucksollwert (PZS) entlang der Einsatzgrenze (EG) des Parallelverdichters (164) liegende mögliche Werte sind.

8. Kälteanlage nach einem der voranstehenden Ansprüche, **dadurch gekennzeichnet, dass** der Wert des Hochdrucks (PH) im Kältemittelkreislauf (10) die Führungsgröße (F) darstellt, und/oder dass insbesondere Temperatur des Kältemittels beim Austritt aus dem hochdruckseitigen kältemittelkühlenden Wärmeübertrager (34) die Führungsgröße (F) darstellt, und/oder dass insbesondere der Wert einer Umgebungstemperatur der den hochdruckseitigen Wärmeübertrager kühlenden Luft die Führungsgröße (F) darstellt.

9. Kälteanlage nach einem der voranstehenden Ansprüche, **dadurch gekennzeichnet, dass** der zwischendruckvariierende Führungsgrößenbereich (FBZ) einen thermodynamisch kritischen Führungsgrößenwert (FK) mit umfasst.

10. Kälteanlage nach einem der Ansprüche 1 bis 8, **dadurch gekennzeichnet, dass** der zwischendruckvariierende Führungsgrößenbereich (FBZ) nahe einem thermodynamisch kritischen Führungsgrößenwert (FK) liegt.

11. Kälteanlage nach einem der voranstehenden Ansprüche, **dadurch gekennzeichnet, dass** der zwischendruckvariierende Führungsgrößenbereich (FBZ) sich von einem oberen Führungsgrößenwert (Fₒ) bis zu einem unteren Führungsgrößenwert (Fᵤ) erstreckt, dass insbesondere der obere Führungsgrößenwert (Fₒ) mit der Führungsgröße (Fᵥ) bei Volllast zusammenfällt, oder dass insbesondere der obere Führungsgrößenwert (Fₒ) unterhalb der Führungsgröße (Fᵥ) bei Volllast liegt, dass insbesondere der untere Führungsgrößenwert (Fᵤ) mit einem parallelverdichtungsbegrenzenden Führungsgrößenwert (Fₚ) zusammenfällt, oder dass insbesondere der untere Führungsgrößenwert (Fᵤ) oberhalb des parallelverdichtungsbegrenzenden Führungsgrößenwerts (Fₚ) liegt.

12. Kälteanlage nach einem der voranstehenden Ansprüche, **dadurch gekennzeichnet, dass** die Steuerung (40) dann, wenn die Führungsgröße (F) einen parallelverdichtungsbegrenzenden Führungsgrößenwerts (Fₚ) unterschreitet von Parallelverdichtungsbetrieb auf Flashgas/Bypass-Betrieb umschaltet.

13. Kälteanlage nach Anspruch 12, **dadurch gekennzeichnet, dass** die Steuerung (40) im Flashgas/Bypass-Betrieb den Parallelverdichter (164) abschaltet.

14. Kälteanlage nach Anspruch 12, **dadurch gekennzeichnet, dass** die Steuerung (40) im Flashgas/Bypass-Betrieb den Parallelverdichter (164) zur Verdichtung von Kältemittel von Niederdruck (PN) auf Hochdruck einsetzt.

15. Kälteanlage nach einem der voranstehenden Ansprüche, **dadurch gekennzeichnet, dass** die Steuerung (40) im Flashgas/Bypass-Betrieb durch ein Expansionsorgan (134) Kältemittel aus dem Zwischendrucksammler (42) auf ein niedrigeres Druckniveau expandiert und den Zwischendruck (PZ) auf einem vorgebbaren Wert hält, dass insbesondere das Expansionsorgan (134) im Flashgas/Bypass-Betrieb das Kältemittel aus dem Zwischendrucksammler (42) auf Niederdruck (PN) expandiert.

16. Kälteanlage nach einem der voranstehenden Ansprüche, **dadurch gekennzeichnet, dass** die Steuerung (40) die Variation des Zwischendrucksollwert (PZS) in Abhängigkeit von der Führungsgröße (F) unterbricht, wenn eine Drehzahl des Parallelverdichters (164) auf eine vorgegebene Minimaldrehzahl abgefallen ist und wieder aufnimmt, wenn die Drehzahl des Parallelverdichters (164) wieder höher ist als die vorgegebene Minimaldrehzahl.

17. Kälteanlage nach einem der voranstehenden Ansprüche, **dadurch gekennzeichnet, dass** die Steuerung (40) die Variation des Zwischendrucksollwerts (PZS) in Abhängigkeit von der Führungsgröße (F) unterbricht, wenn ein Öffnungsgrad des Expansionsorgans (38) auf einen vorgegebenen minimalen Öffnungsgrad abgefallen ist, und wieder aufnimmt, wenn der Öffnungsgrad des Expansionsorgans (38) wieder größer ist als der vorgegebene minimale Öffnungsgrad.

## Claims

1. Refrigeration system comprising a control system (40), a refrigerant circuit (10) through which an overall mass flow (G) of a refrigerant is fed, a heat exchanger (34) which is arranged in the refrigerant circuit (10) for cooling refrigerant at the high pressure side, an expansion element (38) which is arranged in the refrigerant circuit (10) and cools the overall mass flow (G) of the refrigerant in the active state by expansion and thereby produces a main mass flow (H) consisting of liquid refrigerant and an auxiliary mass flow (Z) consisting of gaseous refrigerant which enter an intermediate pressure accumulator (42) and are separated therein into the main mass flow (H) and the auxiliary mass flow (Z), at least one normal refrigerating stage which extracts a normal refrigerating mass flow (N) from the main mass flow (H) in the intermediate pressure accumulator (42) and expands it to a low pressure (PN) in at least one normal refrigerating expansion unit (54) and thereby makes the refrigerating capacity available for the normal refrigerating process, a refrigerant compressor unit (12) which compresses the normal refrigerating mass flow (N) from low pressure (PN) to high pressure (PH), and a parallel compressor (164) which sucks refrigerant from the intermediate pressure accumulator (42) in a parallel compression mode of operation of the refrigerant circuit (10) and compresses it to high pressure (PH), wherein the power of the parallel compressor (164) is controlled by the control system (40), which determines at least one reference variable (F) representing a load state of the refrigerant circuit (10), determines at least one set intermediate pressure value (PZS) on the basis of the at least one reference variable (F) in a parallel compressor mode of operation, and regulates the intermediate pressure (PZ) in accord with the set intermediate pressure value (PZS) at least in the parallel compressor mode of operation,
**characterised in that** the control system (40) only takes into consideration reference variables (F) lying within an intermediate-pressure-varying range of reference variables (FBZ) for the determination of the set intermediate pressure value (PZS), **in that** the intermediate-pressure-varying range of reference variables (FBZ) is a sub-range of a load-dependent range of reference variables (FBL), **in that** the control system (40) only draws on set intermediate pressure values (PZS) for the regulation of the intermediate pressure (PZ) which lie in a range extending from a minimum intermediate pressure (MiPZ) up to a maximum intermediate pressure (MaPZ), and **in that** an increase of the value of the reference variable (F) within the intermediate-pressure-varying range of reference variables (FBZ) leads to an increase of the value of the set intermediate pressure value (PZS).

2. A refrigeration system in accordance with Claim 1, **characterized in that** the relationship between the reference variable (F) and the set intermediate pressure value (PZS) changing therewith is determined in such a way that, taken with reference to the efficiency in the case of constant intermediate pressure (PZ) in the parallel compression mode of operation, there is an increase of the efficiency due to the varying set intermediate pressure value (PZS).

3. A refrigeration system in accordance with any of the preceding Claims, **characterized in that** there is a linear relationship between the value of the reference variable (F) and the set intermediate pressure value (PZS) within the range of reference variables (FBZ).

4. A refrigeration system in accordance with any of the preceding Claims, **characterized in that** the relationship between the value of the reference variable (F) and the set intermediate pressure value (PZS) is nonlinear within the intermediate-pressure-varying range of reference variables (FBZ).

5. A refrigeration system in accordance with any of the preceding Claims, **characterized in that** the relationship between the value of the reference variable (F) and the set intermediate pressure value (PZS) is predetermined by the operating limits (EG) of the parallel compressor (164, 165).

6. A refrigeration system in accordance with any of the preceding Claims, **characterized in that** the relationship between the reference variable (F) and the set intermediate pressure value (PZS) is predetermined **in that** the greatest possible value of the set intermediate pressure value (PZS) within the operating limits (EG) of the parallel compressor (164) is selected for the respective values of the reference variable (F).

7. A refrigeration system in accordance with any of the preceding Claims, **characterized in that** the values for the set intermediate pressure value (PZS) are possible values lying along the operating limits (EG) of the parallel compressor (164).

8. A refrigeration system in accordance with any of the preceding Claims, **characterized in that** the value of the high pressure (PH) in the refrigerant circuit (10) represents the reference variable (F), and/or **in that** in particular the temperature of the refrigerant when emerging from the high pressure side of the refrigerant-cooling heat exchanger (34) represents the reference variable (F), and/or **in that** in particular the value of an ambient temperature of the air cooling the heat exchanger on the high pressure side represents the reference variable (F).

9. A refrigeration system in accordance with any of the preceding Claims, **characterized in that** the intermediate-pressure-varying range of reference variables (FBZ) comprises therein a thermodynamically critical reference variable value (FK).

10. A refrigeration system in accordance with any of the Claims 1 to 8, **characterized in that** the intermediate-pressure-varying range of reference variables (FBZ) lies close to a thermodynamically critical reference variable value (FK).

11. A refrigeration system in accordance with any of the preceding Claims, **characterized in that** the intermediate-pressure-varying range of reference variables (FBZ) extends from an upper reference variable value (Fₒ) to a lower reference variable value (Fᵤ), **in that** in particular the upper reference variable value (Fₒ) coincides with the reference variable (Fᵥ) at full load, or **in that** in particular the upper reference variable value (Fₒ) lies below the reference variable (Fᵥ) at full load, **in that** in particular the lower reference variable value (Fᵤ) coincides with a parallel- compression-limiting reference variable value (Fₚ), or **in that** in particular the lower reference variable value (Fu) lies above the parallel-compression-limiting reference variable value (Fₚ).

12. A refrigeration system in accordance with any of the preceding Claims, **characterized in that** the control system (40) switches over from a parallel compression mode of operation to a flashgas/bypass mode of operation if the reference variable (F) falls below a parallel-compression-limiting reference variable value (Fₚ).

13. A refrigeration system in accordance with Claim 12, **characterized in that** the control system (40) switches off the parallel compressor (164) in the flashgas/bypass mode of operation.

14. A refrigeration system in accordance with Claim 12, **characterized in that**, in the flashgas/bypass mode of operation, the control system (40) sets the parallel compressor (164) from low pressure (PN) to high pressure for the purposes of compressing the refrigerant.

15. A refrigeration system in accordance with any of the preceding Claims, **characterized in that**, in the flashgas/bypass mode of operation, the control system (40) expands the refrigerant from the intermediate pressure accumulator (42) to a lower pressure level by means of an expansion element (134) and holds the intermediate pressure (PZ) at a predeterminable value, **in that** in particular the flashgas/bypass mode of operation, the expansion element (134) expands the refrigerant from the intermediate pressure accumulator (42) to low pressure (PN).

16. A refrigeration system in accordance with any of the preceding Claims, **characterized in that** the control system (40) interrupts the variation of the set intermediate pressure value (PZS) in dependence on the reference variable (F) if a rotational speed of the parallel compressor (164) has fallen to a predetermined minimum rotational speed and restarts it when the rotational speed of the parallel compressor (164) is again higher than the predetermined minimum rotational speed.

17. A refrigeration system in accordance with any of preceding Claims, **characterized in that** the control system (40) interrupts the variation of the set intermediate pressure value (PZS) in dependence on the reference variable (F) if an opening degree of the expansion element (38) has fallen to a predetermined minimum opening degree, and restarts it when the opening degree of the expansion element (38) is again larger than the predetermined minimum opening degree.

## Revendications

1. Installation frigorifique comprenant une commande (40), un circuit frigorifique (10) dans lequel un flux massique total (G) d'un réfrigérant est conduit, un échangeur de chaleur (34) refroidissant un réfrigérant du côté haute pression et agencé dans le circuit frigorifique (10), un élément d'expansion (38) agencé dans le circuit frigorifique (10) et qui, à l'état actif, refroidit par expansion le flux massique total (G) du réfrigérant et ce faisant produit un flux massique principal (H) constitué d'un réfrigérant liquide et un flux massique complémentaire (Z) constitué d'un réfrigérant sous forme de gaz qui entrent dans un collecteur de pression intermédiaire (42) et sont séparés dans celui-ci en flux massique principal (H) et flux massique complémentaire (Z), au moins un étage de refroidissement normal, lequel évacue un flux massique de refroidissement normal (N) issu du flux massique principal (H) dans le collecteur de pression intermédiaire (42) et le soumet à une expansion dans au moins une unité d'expansion de refroidissement normal (54) jusqu'à une basse pression (PN) et ce faisant met à disposition une puissance frigorifique pour un refroidissement normal, une unité de compresseur frigorifique (12) comprimant le flux massique de refroidissement normal (N) d'une basse pression (PN) vers une haute pression (PH), et un compresseur parallèle (164), lequel dans un fonctionnement de compression parallèle du circuit frigorifique (10) aspire un réfrigérant issu du collecteur de pression intermédiaire (42) et le comprime jusqu'à une haute pression (PH), dans laquelle le compresseur parallèle (164) est commandé en termes de puissance par la commande (40) qui établit au moins une grandeur de référence (F) représentant un état de charge du circuit frigorifique (10), laquelle grandeur de référence établit, au moins dans un fonctionnement de compression parallèle, une valeur de consigne de pression intermédiaire (PZS) sur la base de la au moins une grandeur de référence (F), et qui régule, au moins dans le fonctionnement de compression parallèle, la pression intermédiaire (PZ) conformément à la valeur de consigne de pression intermédiaire (PZS),
**caractérisée en ce que**, pour l'établissement de la valeur de consigne de pression intermédiaire (PZS), la commande (40) prend uniquement en compte des grandeurs de référence (F) se situant à l'intérieur d'une plage de grandeurs de référence faisant varier la pression intermédiaire (FBZ), **en ce que** la plage de grandeurs de référence faisant varier la pression intermédiaire (FBZ) est une plage partielle d'une plage de grandeurs de référence liées à la charge (FBL), **en ce que** la commande (40) met à contribution uniquement des valeurs de consigne de pression intermédiaire (PZS) pour la régulation de la pression intermédiaire (PZ) qui se situent dans une plage s'étendant depuis une pression intermédiaire minimale (MiPZ) à une pression intermédiaire maximale (MaPZ), et **en ce qu'**à l'intérieur de la plage de grandeurs de référence faisant varier la pression intermédiaire (FBZ), une augmentation de la valeur de la grandeur de référence (F) conduit à une augmentation de la valeur de la valeur de consigne de pression intermédiaire (PZS).

2. Installation frigorifique selon la revendication 1, **caractérisée en ce que** la relation entre la grandeur de référence (F) et la valeur de consigne de pression intermédiaire (PZS) se modifiant avec celle-ci est établie de telle sorte que par rapport au degré d'efficacité, sous une pression intermédiaire (PZ) constante dans le fonctionnement de compression parallèle, un accroissement du degré d'efficacité résulte de la valeur de consigne de pression intermédiaire (PZS).

3. Installation frigorifique selon l'une des revendications précédentes, **caractérisée en ce qu'**à l'intérieur de la plage de grandeurs de référence (FBZ) il existe une relation linéaire entre la valeur de la grandeur de référence (F) et la valeur de consigne de pression intermédiaire (PZS).

4. Installation frigorifique selon l'une des revendications précédentes, **caractérisée en ce qu'**à l'intérieur de la plage de grandeurs de référence faisant varier la pression intermédiaire (FBZ) la relation entre la valeur de la grandeur de référence (F) et la valeur de consigne de pression intermédiaire (PZS) est non linéaire.

5. Installation frigorifique selon l'une des revendications précédentes, **caractérisée en ce que** la relation entre la valeur de la grandeur de référence (F) et la valeur de consigne de pression intermédiaire (PZS) est prédéfinie par la limite d'utilisation (EG) du compresseur parallèle (164, 165).

6. Installation frigorifique selon l'une des revendications précédentes, **caractérisée en ce que** la relation entre la grandeur de référence (F) et la valeur de consigne de pression intermédiaire (PZS) est prédéfinie **en ce que** pour les valeurs respectives de la grandeur de référence (F) la valeur maximale possible respective de la valeur de consigne de pression intermédiaire (PZS) est sélectionnée à l'intérieur de la limite d'utilisation (EG) du compresseur parallèle (164).

7. Installation frigorifique selon l'une des revendications précédentes, **caractérisée en ce que** les valeurs pour la valeur de consigne de pression intermédiaire (PZS) sont des valeurs possibles se situant le long de la limite d'utilisation (EG) du compresseur parallèle (164).

8. Installation frigorifique selon l'une des revendications précédentes, **caractérisée en ce que** la valeur de la haute pression (PH) dans le circuit frigorifique (10) représente la grandeur de référence (F), et/ou **en ce qu'**en particulier une température du réfrigérant en sortie de l'échangeur de chaleur (34) refroidissant un réfrigérant du côté haute pression représente la grandeur de référence (F), et/ou en ce qu'en particulier la valeur d'une température ambiante de l'air refroidissant l'échangeur de chaleur du côté haute pression représente la grandeur de référence (F).

9. Installation frigorifique selon l'une des revendications précédentes, **caractérisée en ce que** la plage de grandeurs de référence faisant varier la pression intermédiaire (FBZ) comprend avec elle une valeur de grandeur de référence (FK) critique thermodynamique.

10. Installation frigorifique selon l'une des revendications 1 à 8, **caractérisée en ce que** la plage de grandeurs de référence faisant varier la pression intermédiaire (FBZ) est proche d'une valeur de grandeur de référence (FK) critique thermodynamique.

11. Installation frigorifique selon l'une des revendications précédentes, **caractérisée en ce que** la plage de grandeurs de référence faisant varier la pression intermédiaire (FBZ) s'étend d'une valeur de grandeur de référence supérieure (Fₒ) à une valeur de grandeur de référence inférieure (Fᵤ), **en ce qu'**en particulier la valeur de grandeur de référence supérieure (Fₒ) se confond avec la grandeur de référence (Fᵥ) à pleine charge, ou **en ce qu'**en particulier la valeur de grandeur de référence supérieure (Fₒ) est inférieure à la grandeur de référence (Fᵥ) à pleine charge, **en ce qu'**en particulier la valeur de grandeur de référence inférieure (Fᵤ) se confond avec une valeur de grandeur de référence délimitant une compression parallèle (Fₚ), ou **en ce qu'**en particulier la valeur de grandeur de référence inférieure (Fᵤ) est supérieure à la valeur de grandeur de référence délimitant une compression parallèle (Fₚ).

12. Installation frigorifique selon l'une des revendications précédentes, **caractérisée en ce que** la commande (40) commute d'un fonctionnement de compression parallèle à un fonctionnement de gaz flash/dérivation lorsque la grandeur de référence (F) devient inférieure à une valeur de grandeur de référence délimitant une compression parallèle (Fₚ).

13. Installation frigorifique selon la revendication 12, **caractérisée en ce qu'**en fonctionnement de gaz flash/dérivation la commande (40) éteint le compresseur parallèle (164).

14. Installation frigorifique selon la revendication 12, **caractérisée en ce qu'**en fonctionnement de gaz flash/dérivation, pour comprimer un réfrigérant, la commande (40) fait passer le compresseur parallèle (164) d'une basse pression (PN) à une haute pression.

15. Installation frigorifique selon l'une des revendications précédentes, **caractérisée en ce qu'**en fonctionnement de gaz flash/dérivation la commande (40) soumet à une expansion, par le biais d'un élément d'expansion (134), un réfrigérant issu du collecteur de pression intermédiaire (42) jusqu'à un niveau de pression plus bas et maintient la pression intermédiaire (PZ) à une valeur pouvant être prédéfinie, **en ce qu'**en particulier en fonctionnement de gaz flash/dérivation l'élément d'expansion (134) soumet à une expansion le réfrigérant issu du collecteur de pression intermédiaire (42) jusqu'à une basse pression (PN).

16. Installation frigorifique selon l'une des revendications précédentes, **caractérisée en ce que** la commande (40) interrompt la variation de la valeur de consigne de pression intermédiaire (PZS) en fonction de la grandeur de référence (F) lorsqu'une vitesse de rotation du compresseur parallèle (164) est tombée à une vitesse de rotation minimale prédéfinie, et la reprend lorsque la vitesse de rotation du compresseur parallèle (164) est à nouveau supérieure à la vitesse de rotation minimale prédéfinie.

17. Installation frigorifique selon l'une des revendications précédentes, **caractérisée en ce que** la commande (40) interrompt la variation de la valeur de consigne de pression intermédiaire (PZS) en fonction de la grandeur de référence (F) lorsqu'un degré d'ouverture de l'élément d'expansion (38) est tombé à un degré d'ouverture minimal prédéfini, et la reprend lorsque le degré d'ouverture de l'élément d'expansion (38) est à nouveau supérieur au degré d'ouverture minimal prédéfini.
